# EUROPEAN PATENT SPECIFICATION

(11) **EP 0 888 257 B1**
(45) Date of publication and mention of the grant of the patent: **17.09.2003**
(21) Application number: 97916756.6
(22) Date of filing: 13.03.1997
(51) Int. Cl.: C03B 5/02, C03B 5/027, C03B 18/02, C03B 18/14

(54) **METHOD OF MAKING GLASS**
VERFAHREN ZUR HERSTELLUNG VON GLAS
PROCEDE DE FABRICATION DE VERRE

(30) Priority: 18.03.1996 US 617620
(43) Date of publication of application: 07.01.1999
(73) Proprietor: Dynelec Corporation, Columbus, OH 43235 (US)
(72) Inventor: TITOV, Nikolai Fyodorovich, Volgograd (RU); POLYAKOV, Sergei Vladimirovich, Volgograd (RU); BARABASH, Vitaly, Romanovich, 400137 Volgograd (RU); KOLESNIKOV, Alexander, Georgievich, 400105 Volgograd (RU); GLOVCHENKO, Alexander, Ivanovich, 400066 Volgograd (RU); POLYAKOV, Pavel, Vladimirovich, 400120 Volgograd (RU); SOBOLEV, Valerian, Markovich, Mytischensky district Moskow Region (RU); SKACHKO, Vasilly, Sergeevich, 400131 Volgograd (RU); BALDWIN, Roy, Donald, Dublin, Ohio 43017 (US); DUNAEV, Igor, Mikhailovich, 350042 Krasnodar (RU); BURYLYOV, Boris, Petrovich, 350042 Krasnodar (RU)
(74) Representative: Waxweiler, Jean
(86) International application number: PCT/US97/03980
(87) International publication number: WO 97/034841

(56) References cited:
- US-A- 1 785 888
- US-A- 1 955 451
- US-A- 2 244 267
- US-A- 3 242 060
- US-A- 3 505 049
- US-A- 3 520 979
- US-A- 3 656 927
- US-A- 3 902 882
- US-A- 3 942 968
- US-A- 5 096 479
- US-E- R E29 464

## Description

### BACKGROUND OF THE INVENTION

The invention relates to a method of making glass, and more particularly to a method of making a single component glass or a multi-component glass having excellent physical and chemical properties.

Glass made from a single component has excellent physical and chemical properties. These properties allow the use of single component glasses under extreme conditions. For example, quartz glass, which is pure SiO₂, has high melting and softening temperatures, high strength, hardness, wear resistance, thermal endurance, stability to attack by corrosive media, and high transparency for visible and ultraviolet light. However, the outstanding properties of quartz glass are counterbalanced by its high manufacturing cost. The processes typically used to make quartz glass, electrothermal, gas flame, plasma, and steam phase, are all labor intensive. In addition, the melting temperature of quartz glass is extremely high (approximately 1750° C), and the glass requires extensive heat treatment for certain uses. These factors all contribute to the high cost of making quartz glass, which hinders its widespread use.

In order to lower the initial melting point, and consequently the cost, modifiers are frequently added to glass. Modifiers are also commonly used to obtain specific desirable properties of the glass. However, the presence of the modifiers in the glass deteriorates the basic properties of the glass.

A multi-component glass can be considered as having two parts: the lattice and the modifiers. The glass lattice is essentially a one piece, three-dimensional anion. The properties of the glass are defined primarily by the lattice. The modifiers are groups of cations which can move within the lattice at high temperatures. The modifiers enter into ionic bonds with the elements of the lattice.

In order to obtain a glass whose properties are comparable to those of a single component glass from a multi-component glass mix, researchers have attempted to remove the modifiers from multi-component glass systems. Several well-known multi-component glasses whose properties are comparable to those of quartz glass have been developed. Vycor® glass, which contains approximately 96% SiO₂, is made from a starting mixture of about 10% Na₂O, 30% B₂O₃, and 60% SiO₂. The components are heated to approximately 1600 °C to produce molten glass and then cooled. The supercooled liquid finds its way into a region of metastable separation and breaks down into two liquid phases. One phase has a composition close to that of pure SiO₂, while the other is enriched in Na₂O and B₂O₃. The two liquids form mutually permeating structures. The sodium and boron oxides are then leached out by treating the material with acid. The remainder of the material is brittle, vitreous, nearly pure silicon oxide. It is then subjected to thermal treatment at a temperature of approximately 1000° C where it passes into a flowable state forming a non-porous, transparent glass having properties which are comparable to quartz glass.

Another multi-component glass which behaves like pure quartz glass is Pyrex® glass. The composition of Pyrex® glass is approximately 4% Na₂O, 16% B₂O₃, and 80% SiO₂. According to the phase diagram of the Na₂B₈O₁₃ - SiO₂ system, the glass composition is in a region of supercooled liquid segregation. Because the volume fraction of sodium tetraborate is small (between 10 and 20% by weight), isolated drops of sodium and boron oxides are formed in the glass matrix. The drops cannot be leached because they are enveloped by the matrix phase.

The specific chemical composition of the starting mix used for production of Vicor glass does not require heating to high temperatures. A special method of removing the active mobile part from the melt is employed in its production. Two phases with interpenetrating weakly bonded structure are formed in a process of super cooling of the melt. One of the phases is removed by acid. The balance is brittle, cellular, one-phase in chemical composition vitreous material with 96% content of silicon oxide. At a final step, the material is subjected to thermal treatment at a temperature of 1000°C and then passes into a flowable state forming a non-porous transparent glass comparable in its properties with quartz glass.

Pyrex glass is also produced from a starting mix of specific chemical composition having a low melting temperature but with one of its phases represented as drops of liquid which are removed chemically with great difficulty. Since such a drop, isolated by the other phase-lattice and having practically no structural bond with it, the mechanical strength and other properties of such glass are defined by the properties of the phase-lattice consisting mainly of silicon oxide.

The methods of manufacture of the one-component glasses by use of the traditional patterns are applicable if the starting mix has a specific chemical composition. In addition, such methods are labor intensive and/or costly due to high melting temperature (production of quartz glass), or because of the increased number and complexity of technological operations (production of Vicor glass). It is evident that the method of removing the active mobile part of the glass directly from a multi-component low temperature melt will have the highest effect. In this event, there is a possibility to produce another part of the glass-lattice in the form of material possessing better technical characteristics than the glass obtained from the starting multi-component system. It is also evident that such a method is applicable to a multi-component melt of the starting mix of practically any glass-forming chemical composition in which we can identify two constituent parts.

U.S. Patent No. 3,505,049 proposes to modify glass by placing float glass on tin in a chamber in which is disposed overhead an electrode. The tin is used as the other electrode and a d.c. electric field is impressed between the electrodes. The atmosphere in the chamber can contain ions that are forced into the glass under the electric field thus generated.

U.S. Patent No. 1,955,451 disposes a melt between the electrodes to establish a current therethrough (Fig. 2) such that the undesired oxides migrate toward electrode 6, thus impoverishing the melt in the upper part of the chamber. The common, or waste, fusion containing the oxides carried out of the refined fusion is withdrawn from outlet 3. Thus, this reference is making two different glass fractions―one depleted in undesired oxides and a waste enriched in such oxides.

Although methods of producing single component glasses and multi-component glasses which exhibit properties comparable to single component glasses are known, the existing processes are expensive and complex. Therefore, it would be desirable to have a simple, inexpensive process which can produce a single component glass or a multi-component glass having excellent physical and chemical properties.

### BRIEF DESCRIPTION OF THE DRAWINGS

Fig. 1 is a schematic of a batch process showing underlying principles but not using the method of the present invention.
Fig. 2 is a schematic of the float glass process.
Fig. 3 is a schematic of the float glass process using the method of the present invention with an electrochemical and an electric field.
Fig. 4 is a schematic of the method of the present invention which produces a positive charge in glass during its production.
Fig. 5 is a schematic of a method of producing or recharging a piece of glass made using the method of the present invention.
Fig. 6 is a schematic of the method of the present invention which produces a positive charge in an existing piece of glass.
Fig. 7 is a diagram of a typical volt-ampere characteristic of an electrochemical process for a multicomponent system.
Fig. 8 is a schematic of a process which includes recycling the neutralized molten metal cathode.
Fig. 9 is a schematic of the use of glass made according to the present invention as an energy accumulator.

A method for the production of a single component glass or a multi-component glass having excellent physical and chemical properties is disclosed, according to claim 1 wherein the concentration of mobile cations in the molten glass is reduced.

The method preferably includes drawing the molten glass continuously out of the bath. The method preferably includes applying at least two force fields to reduce the concentration of cations in the molten glass.

One embodiment of the method comprises providing a bath of molten glass having a glass forming material, and a glass modifying material having cations capable of being removed from the molten glass. A first and second electrode are provided in contact with the molten glass, the melt passing from first to second electrode the second electrode being capable of receiving cations from the molten glass. A first electric voltage is applied across the first and second electrodes so that the polarity of the first electrode remains positive with respect to the second electrode, causing a first electric current to flow through a portion of the molten glass from the second electrode to the first electrode. A third electrode in contact with the molten glass is provided, the third electrode being capable of receiving cations from the molten glass, and a fourth electrode is provided which is not in contact with the molten glass, the fourth electrode being separated from the molten glass by an inert current-conducting medium. A second electric voltage is applied across the third and fourth electrodes so that the polarity of the fourth electrode remains positive with respect to the third electrode, causing a second electric current to flow from the third electrode to the fourth electrode through the molten glass and the inert current-conducting medium causing the reduction of the cations of the glass modifying material at the second and third electrodes and the removal of the cations from the molten glass such that the concentration of cations in the molten glass is reduced.

The second and third electrodes are preferably a single, molten electrode. The molten glass is preferably drawn continuously out of the bath. The direction of the second electric current is preferably perpendicular to the direction of flow of the molten glass.

Glass having a positive charge can be produced using this method. This is preferably done by providing a fifth and a sixth electrode not in contact with the surface of the glass and an embedded electrode in contact with the surface of the glass. A third electric voltage is applied across the fifth and sixth electrodes causing a third electric current to flow from the glass through the embedded electrode in the direction of lesser potential, removing electrons from the glass such that a positive charge is formed in the glass.

Once a piece of glass has been produced using a process as described herein, a positive charge can also be produced in that glass using the following method. The glass is heated to a temperature above its softening point, and an embedded electrode in contact with the surface of the glass is provided. A voltage is applied across a pair of electrodes not in contact with the surface of the glass causing an electric current to flow from the glass though the embedded electrode in the direction of lesser potential, removing electrons from the glass such that a positive charge is formed in the glass.

The metal formed by the reduction of the cations at the cathode can be oxidized and recycled for use as a starting material in the process.

The term "glass forming material" means a material which can form glass, such as SiO₂ and Al₂O₃. These materials include glass *forming* elements 1) having a high charge, such as P⁵⁺, V⁵⁺, Si⁴⁺, Ti⁴⁺, Zn⁴⁺, Ge⁴⁺, B³⁺, Al³⁺, Fe³⁺, and cations with similar crystal chemical behavior, 2) Fe²⁺, Co²⁺, and Ni²⁺, and 3) chemical elements whose cations, such as Pb²⁺, Cd²⁺, Zn²⁺, Be²⁺ and the cations with similar crystal chemical behavior, which form stable coordination polyhedrons with the elements of Groups VI and VII of the periodic table. These glass forming elements are combined with the elements of Groups VI and VII of the periodic table, or with salts or mixtures of salts such as carbonates, sulfates, nitrates, and phosphates.

The term "glass modifying material" means a material which by itself cannot form glass, but which can form glass when combined in a molten state with a glass forming material. Examples of glass modifying materials include Na₂O and Mg₂O. These materials include glass modifying elements such as 1) Li⁺, Na⁺, K⁺, and cations with similar physical and chemical properties, 2) Ca²⁺, Sr²⁺, B²⁺, and cations with similar physical and chemical properties, and 3) Pb²⁺, Cd²⁺, Zn²⁺, and cations with similar physical and chemical properties, which do not form stable bonds with the elements of Groups VI and VII of the periodic table. Glass modifying elements are combined with the elements of Groups VI and VII of the periodic table, or with salts and mixtures of salts such as carbonates, sulfates, nitrates, and phosphates.

The process of manufacturing glass according to the present invention is substantially the same as those which are conventional in the art, with the exception that the molten glass is exposed to one or more force fields. Underlying principles will be described in conjunction with a batch process, whereas the invention will be described by means of a float glass process, although other processes could also be used.

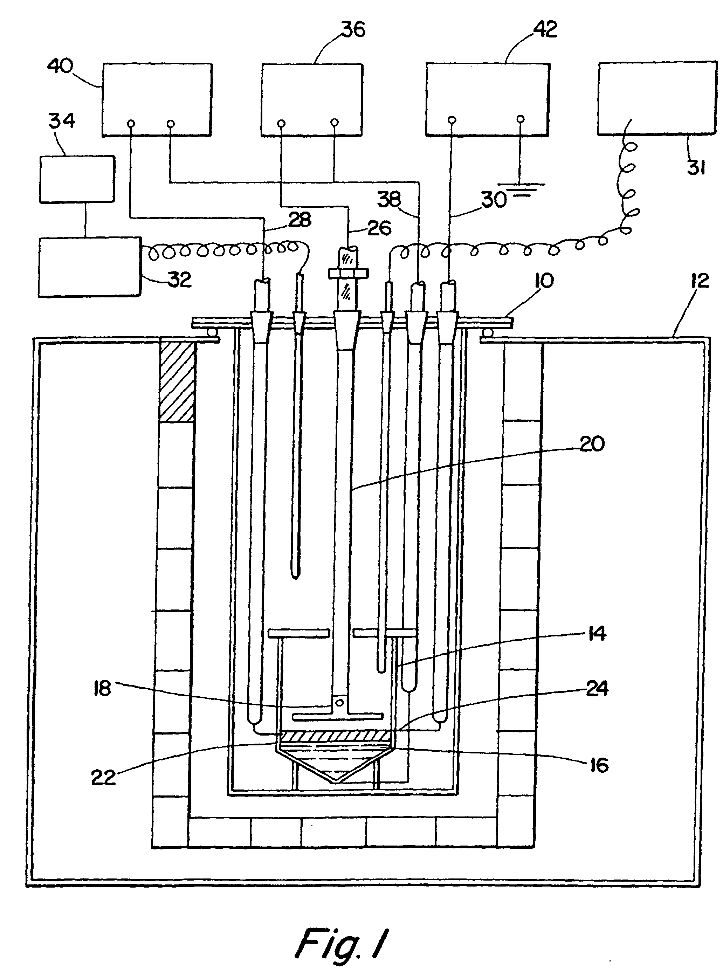

In Fig. 1, a sealed quartz retort 10 would be placed into a high temperature vacuum furnace 12 which would operated at a vacuum of less than 1 mm Hg vacuum. Raw materials of the appropriate composition and mixture would be placed in a quartz crucible 14 on a bed of low melting temperature metal which would become the molten cathode 16. Suitable materials include, but are not limited to, tin and lead. An electrode 18, made of low resistance material, preferably platinum, would be suspended on an appropriately constructed externally adjustable rod 20 above the surface of the raw materials. Electrode 22, made from low resistance material, preferably platinum, would be placed horizontally in the raw materials which would become the molten glass. Another electrode 24, preferably platinum, would be placed near the top surface of the raw materials. Low resistance electrode wires 26, 28, and 30 would be connected to each electrode and brought out of the top of the retort through sealed quartz tubes. A source of dry, inert gas 31, preferably helium or nitrogen, would be supplied to the retort using appropriate flow controls. The interior of the retort would be continuously evacuated and maintained at a vacuum of 1 to 2 mm Hg by a vacuum system 32 with appropriate controls. The vacuum line would be continuously monitored by a mass spectrometer 34 used to determine the nature of the reactions occurring during the process. The electrode wire 26 would be connected to the positive terminal of the high voltage power supply 36. The electrode wire 38 from the molten cathode 16 would be connected to the negative side of the high voltage power supply 36. The positive terminal of the low voltage power supply 40 would be connected to the electrode wire 28. The negative terminal of the low voltage power supply 40 would be connected to the electrode wire 38 from the molten cathode 16. One terminal of a second low voltage power supply 42 would be connected to the electrode wire 30. The other terminal of power supply 42 would be connected to a point of different potential, preferably earth ground.

In this process, only the electrostatic field is used to create the electrochemical cell. Since the anode is not in contact with the molten glass, a neutral layer will not be created. The molten cathode will absorb the glass modifier ion, also preventing the formation of the neutral layer. The two embedded electrodes connected to the low voltage supply are used only for measuring the properties of the glass and are not used to create an electrochemical reaction for removal of ions.

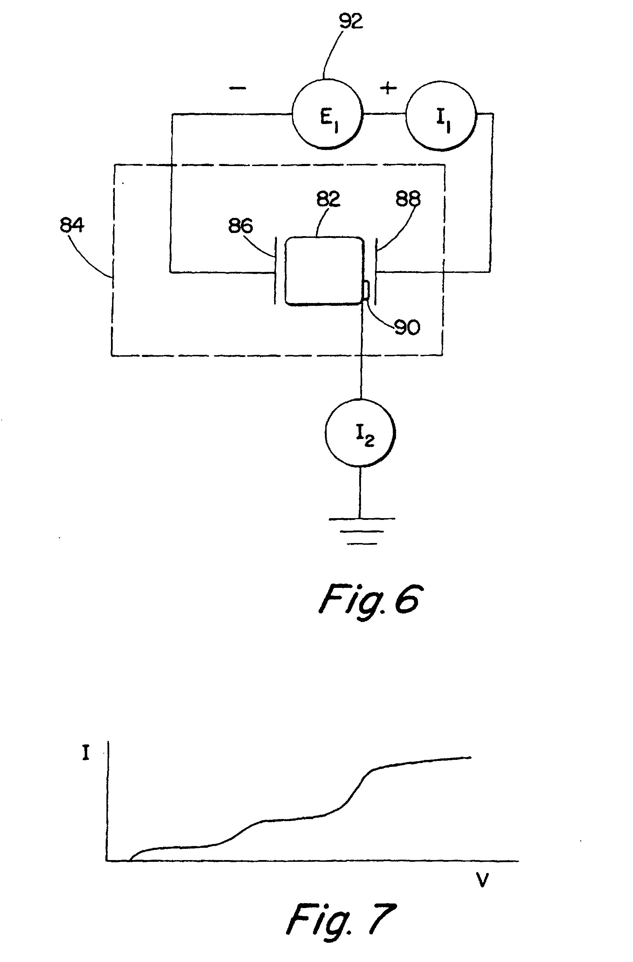

An example of a batch process utilizing a starting mixture of Na₂CO₃ (99.99% pure) and SiO₂ (99.99% pure) would be heated to a molten state at a vacuum of 1 mm Hg and an environment of He with all water, oxygen, nitrogen, and other atmospheric contaminants removed. The Na₂CO₃ would decompose under heat to NaₐO + CO₂ (gas). The gas would be removed from the container. The remaining solid components would form a molten glass with a composition of mobile cations Na₂O and immobile anions SiO₂. Voltage would be applied between the electrode 18 and the molten cathode 16 until ionization of the gas occurs. This voltage depends upon the variables temperature, pressure, gap between the electrode and glass, and gas composition. For helium, the voltage could be as high as 15,000 volts with a 5 mm gap. Application of the voltage would cause the metal ions to accumulate in the molten metal (tin in this example). This would cause an excess of electrons to be present in the glass. The electrons would be conducted to ground with the embedded electrode. When the glass is cooled to a solid or supercooled liquid state it would contain positive charge. The magnitude of the charge is theoretically as high as 227 ampere hours in/on 1 kg of glass. A method similar to Fig. 6, without the thermal furnace, could be used to control the flow of electrons (i.e., current) in and out of the glass.

### Example 1

A glass could be made from a melt containing 26% Na₂O and 74% SiO₂. Quartz sand (SiO₂) and soda ash (Na₂CO₃) would be heated in a vacuum furnace to a temperature of approximately 900°C to obtain a melt. An intermediate vessel or retort (as shown in Fig. 1) would be required in order to assure no contamination to the glass melt from the surfaces of the vacuum furnace. A vacuum of 1 mm Hg would be maintained in the retort and slightly lower in the furnace. A platinum anode would be placed above the glass melt at approximately 5 mm spacing between the glass and anode. A DC voltage sufficient to ionize the gas between the anode and glass would be applied for up to 4 hours. In this example, a helium atmosphere at 1 mm Hg would be maintained above the molten glass. The glass would be cooled, and its properties tested at room temperature. The glass would achieve significant energy storage, theoretically up to 10 amp hours per kilogram of glass.

Caution must be exercised when heating the retort or containment vessel. A heating rate of 2 °C per minute should be used to prevent damage to the quartz containment vessel. In this example, the furnace does not have to be grounded, and DC voltage should be applied to the heating elements to prevent stray electrical fields being present. The vacuum in the furnace should be slightly lower than in the retort to prevent any stray contamination from entering the retort. Stainless steel was selected as the material of construction for the vacuum furnace to prevent as much as possible stray ferrous contamination.

Although not intending to be limited by the theory of operation, it is believed that the invention operates as follows.

When the glass forming material and the glass modifying material are heated to a temperature above the transition temperature of the mixture (the temperature at which the mixture changes from one phase to another), the components in the melt react and form a structural compound. A structural compound is a special type of a true solution having two parts: a relatively immobile part and a relatively mobile part. The immobile part is essentially a single three-dimensional anion in the form of a lattice consisting of either individual macroparts each of which has a negative charge or macroparts bonded between themselves in either one or two directions having a negative charge. The mobile part consists of metal ions randomly distributed in the lattice which can travel under the action of the thermal field and establish groups or associations. Each ion (as a rule they are cations) has a separate ionic bond with the lattice.

The melt represents a new state of the starting components. It exhibits the properties of an electrolyte and conducts current, regardless of whether the starting materials exhibited these properties. Each of the two parts is a charge carrier of the opposite sign which can be transported in the desired direction.

The cations of the mobile part move in the lattice structure by thermal diffusion. This leads to a change in the state of the lattice. This intermediate state is a consequence of the continual breakage and formation of chemical bonds. It is distinguished from the initial state of the lattice by the presence of a negative charge carrier which exists for only a short period of time. At the time of its formation, the negative charge carrier can have electrons with a greater energy than those of the rest of the lattice.

The force fields imposed on the melt prescribe the direction of the charge carriers' movement in the process of thermal diffusion. They lead to the orientation, displacement, and extraction of electrons with a larger energy from the negative charge carriers of the intermediate state of the lattice. This results in a change in the concentration of the mobile part. The mobile part can be either partially or completely removed from the melt. In addition, the force fields can lead to the formation of a positive charge in the melt.

In a regular electrochemical cell, when the ions come in contact with the electrodes, they gain or give away electrons going into a neutral state of atoms or molecules. The atoms or molecules flow up in the form of gas bubbles or settle out in the form of particles and are distributed in the starting electrolyte by thermal diffusion. This liberates space near the electrode for new ions. The efficiency of the electrochemical process depends greatly on the rate of renewal of the layer near the electrode. The electrochemical process can be slowed or stopped altogether if the layer is renewed poorly or not at all.

In a bath of molten glass, the lattice is essentially a single anion. In conducting an electrochemical process in molten glass, initially only the part of the lattice in contact with the anode gives up electrons into the outer electrical circuit, forming an electrically neutral layer. The layer is not renewed in the usual understanding because the lattice is relatively immobile, and consequently the electrochemical process will slow or stop.

This problem cannot be solved by selection of the chemical composition of the starting materials to produce a structural compound with a lattice consisting of microparts spatially distributed in the bulk of the melt. The microparts, being individual anions, will migrate to the anode and be neutralized as in a regular electrolyte. The neutralized microparts come in contact with each other and combine into an electrically neutral layer preventing the neutralization of new microparts. This leads to the termination of the electrochemical process as in the case of the structural compound with a common lattice. The lack of renewal of the layer near the anode causes an increase in the electrical field strength to values leading to the decomposition of the structural compound in the layer near the anode. Decomposition begins when the voltage in the outer electrical circuit of the electrochemical cell reaches between approximately 1.6 and 2 volts.

The relationship of the anode and cathode surfaces and the length of the anode surface defines the current density value in the circuit of the electrochemical cell. The relationships are determined in order to achieve the ultimate current density value for each specific chemical composition of the starting mix. These factors define the efficiency of the removal of the cations from the molten glass.

When the glass contains two or more glass modifying materials which have different cations or which have the same cation but with different charges, the cathode process will consist of two or more sequential extraction processes, each with a different current value. The extraction of the cations with the lowest ultimate current value will occur first, followed by the one with the next lowest value. The increase in the current value occurs due to the different kinetics in the transfer of cations of different types or different charge values. These changes occur within the maximum voltage value in the external circuit not resulting in the breakdown of the inert, current-conducting medium.

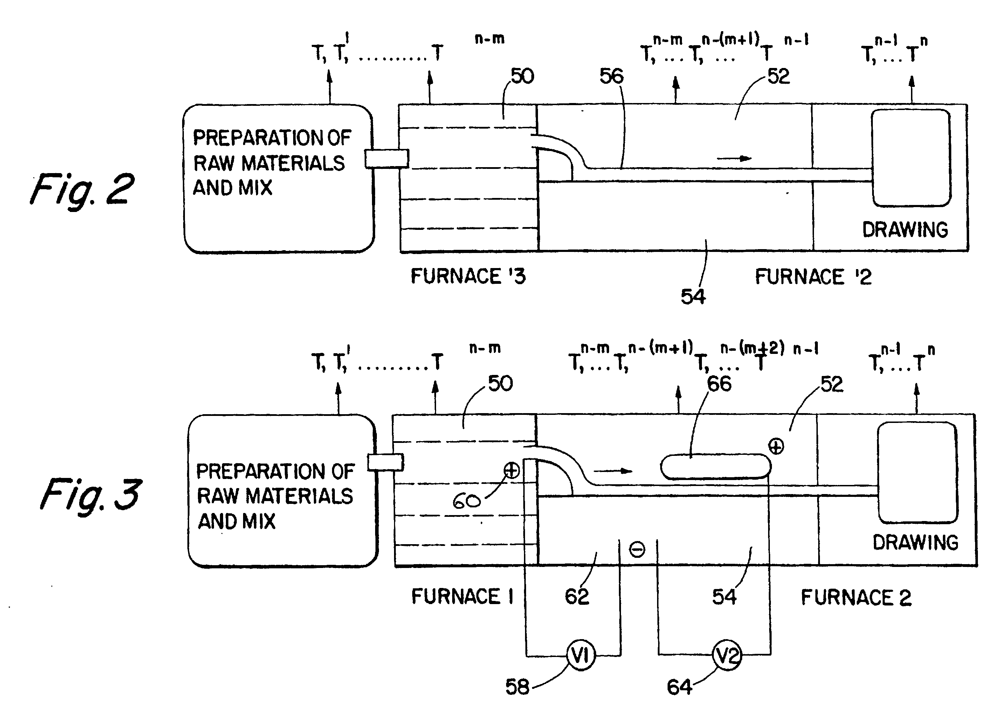

Fig. 2 shows a typical float glass manufacturing process. The glass components are heated to a temperature above the transition temperature in furnace 50. After the components have been melted, they are transferred to furnace 52. Furnace 52 has a bath of molten metal 54 onto which the molten glass 56 is poured. The molten glass 56 spreads across the surface of the molten metal 54, and the upper and lower surfaces of the glass become approximately flat and parallel. Furnace 52 has a series of temperature zones which successively decrease in temperature. The glass is cooled as it progresses through the furnace, with a resulting increase in viscosity. The glass sheet is continuously drawn from the bath of molten glass and further processed as necessary.

Fig. 3 shows one embodiment of the process of the present invention. The molten glass 56 would be transferred through anode 60, which would be made of a material of low electrical resistance, such as platinum, onto cathode 62, i.e. from furnace 50 into furnace 52. An electrochemical cell would be established in the molten glass 56. A voltage 58 would be applied across anode 60 and cathode 62, causing an electric current to flow in the molten glass 56 from cathode 62 toward anode 60. The molten metal, either tin or lead, utilized in the float glass process would be used as cathode 62.

As shown in Fig. 3, the molten glass would travel at a speed which exceeds the absolute value of the speed of the matrix macroparts traveling to an anode under the action of electric forces. During the movement of the molten glass through the region near anode 60, new lattice parts would constantly come in contact with anode 60 and continuously give up electrons into the outer circuit, allowing renewal of the layer near the anode. This would permit continuation of the classic anode-cathode process. This would create the conditions required for efficient removal of the mobile part from the melt.

The molten glass 56 in furnace 52 would flow onto the molten tin cathode of the electrochemical cell but should not contact the walls of tin bath. The freely flowing molten glass 56 would reach a maximum surface contact with the cathode over its surface. The cathode process would commence at the place where the molten glass flow falls down and contacts the molten tin. The cathode process would be characterized by the neutralization of the cations available at the cathode surface. The intensity of neutralization would be proportional to the number of electrons extracted from the lattice at the anode.

The molten glass would be subjected to a second force field as shown in Fig. 3. A voltage 64 would be applied across cathode 62 and anode 66, which is not in contact with the molten glass. Anode 66 is separated from the molten glass by a dry, inert, current-conducting medium, such as nitrogen or helium gas. This would set up an electric current flowing from cathode 62 to anode 66. Anode 66 would preferably be made of platinum and would be sized such that it overlaps the maximum surface area of the molten glass and such that electric discharges are not initiated between the electrodes, the furnace materials, and the molten tin surface not covered by the molten glass.

The electrostatic field would act in conjunction with the thermal field on the mobile cations in the molten glass causing the transport of cations in the direction of cathode 62. The electrostatic field would also increase the energy of the electrons in the lattice to an energy level sufficient to extract them without decomposition of the lattice. The electrons having energy greater than the energy of the electrons constituting the chemical bonding of the structural compound would be extracted first.

The unbound electrons moving in the direction of anode 66 and the cations moving in the direction of cathode 62 would create current in the electric circuit comprising the molten glass, the inert, current-conducting medium, cathode 62, and anode 66. Because anode 66 would not be in contact with the melt, the problems of layer renewal and decomposition at the anode would be eliminated. The maximum voltage of this electric circuit is that voltage which would cause the breakdown of the current-conducting medium.

The molten tin cathode would be continuously saturated with neutralized cations from the glass. The molten tin would have to be constantly renewed so that removal of cations from the glass could continue. The tin/metal alloy could be collected and processed using known methods to produce pure metal. The metal thus formed could also be further processed and used as a starting component of the glass composition. The heat generated in the processing of the metals could be used in the process.

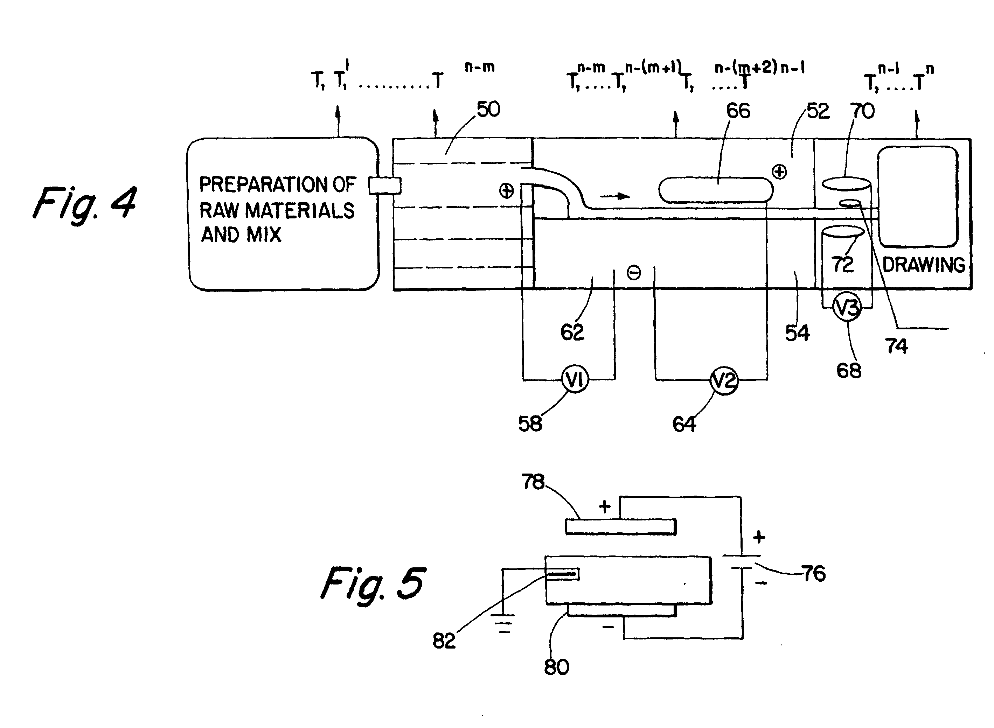

As shown in Fig. 4, a positive charge can be induced in the glass under certain circumstances. When the number of electrons removed from the lattice per unit of time exceeds the number of cations being neutralized at the cathode, the electrons can move in the direction of zero potential. In this case, the electrons will establish a current if the electrode is connected by a conductor to any surface whose potential is different from the potential of the electrode on the glass surface absorbing the electrons. When this happens, a positive charge will be formed in the glass.

In Fig. 4, the glass would be subjected to a third force field. The glass would have been cooled in furnace 52, and the viscosity of the glass would have increased such that the cations would not be able to move easily within the glass. Voltage 68 would be applied across a pair of electrodes 70 and 72. The pair of electrodes 70 and 72 would not be in contact with the molten glass. Embedded electrode 74 would be in contact with the surface of the glass. In this situation, more electrons would be removed from the molten glass at anode 70 than cations would be reduced at cathode 72 due to the increased viscosity of the molten glass. Therefore, the electrons would flow in the direction of embedded electrode 74, and a surplus positive charge would be formed in the molten glass.

Glass having a positive charge could also be produced in a batch process using an arrangement such as that shown in Figure 5. The starting materials are chosen from a combination of glass forming materials and glass modifying materials. The mixture would be heated to a molten state in an environment of vacuum and inert gas. Typically the vacuum would be 1 mm Hg and the gas would be helium or nitrogen. Voltage 76 across the electrodes 78 and 80 would be increased to a level where ionization of the gas would occur allowing a current to flow from the electrode 78 through the glass to the molten cathode 80. This would cause metal ions to collect in the molten metal leaving free electrons in the mixture. The electrons would be conducted to earth with the embedded electrode 82 leaving a positive charge. When the mixture cools a glass would be formed that contains a positive charge. Electrons could return to the glass during the discharge process. However, they would not return to the original lattice positions but rather assume positions as "free electrons" that could be repeatedly removed (thereby, producing a charge in the glass) and returned during discharge.

The invention can be further described as follows.

Glass is a special system comprising different metal oxides, such as Me₂O, MeO, Me₂O₃, MeO₂, Me₂O₅, and MeO₃. In place of oxygen, there can be fluorine, chlorine and elements similar in physical and chemical properties.

The traditional pattern of glass production is realized by sequentially conducting a whole number of physical and chemical processes:${\text{T, T}}^{\text{1}} {\text{, T}}^{\text{2}} {\text{, ..., T}}^{\text{n}} \text{.}$ The enlarged classification of these processes can be represented in the form of the following technological operations: preparation of a glass forming starting mixture from natural or synthetic materials, heating the starting mixture to a temperature required for a complete transition of the mix into a melt with the formation of a new material, cooling the thus obtained material in the state of a melt to a temperature necessary for forming the articles, and thermal or other treatment of the articles aimed at obtaining desired microstructure and physical and chemical properties.

A number of physical and chemical processes${\text{T, T}}^{\text{1}} {\text{, T}}^{\text{2}} {\text{, ..., T}}^{\text{n-m}}$ by the action of the force fields (mechanical, thermal, electrical, and those fields similar to their action) when completed, result in the production of a material consisting of a structural compound in a state of a melt which exhibits the properties of an electrolyte irrespective of whether the starting materials exhibited these properties or not.

In a thus-formed melt, we can identify two constituent parts. One of them is a relatively immobile and practically continuous part in the form of a lattice-ion having a common negative charge. Some electrons which have a greater energy than other electrons entering into the chemical elements of the lattice impart a negative charge to the entire lattice.

Another part of the structural compound is an active and mobile part relative to the first part and represents separate groups or the associations (but not the crystals) of chemical elements having positive charge (cations) where each cation has a separate ionic bond with the lattice.

A number of physical and chemical processes${\text{T}}^{\text{n-m}} {\text{, ..., T}}^{\text{n-1}} {\text{, T}}^{\text{n}}$ end by producing the material called the glass having physical and chemical properties defined by the state and chemical composition of the melt at the moment of obtaining the glass.

The same way as in a melt, we can discern two constituent parts in the glass. The glass lattice is a one-piece, three-dimensional anion having mobile cations only in the space occupied by an entire group of cations. At a high temperature, the cations can move from one group into another without breaking the continuity of the glass lattice.

The lattice is the base of the glass defining its properties. A glass consisting only of chemical elements forming the lattice (a one-component system, e.g., quartz glass) has the best properties, and groups of cations when they exist in the lattice (multi-component systems, e.g., silicate glasses) only impair the main properties of glass and normally are introduced into the glass composition in order to obtain technical characteristics of the glass acceptable for the user at the lowest production cost. The advantage of the one-component glass is generally known. Technical characteristics of such glass allow the reduction in weight of the end product and the use of glass articles in tough operational conditions. Only the high price of articles made of such glass hinders their wide application.

The problem of producing a one-phase in chemical composition vitreous material directly from a low temperature multi-component melt of the starting mix of practically any glass-forming chemical composition in which we can identify two constituent parts is solved by sequentially conducting a number of physical and chemical processes:${\text{T, T}}^{\text{1}} {\text{, T}}^{\text{2}} {\text{, ..., T}}^{\text{n-m}} {\text{, T}}^{\text{n-(m+1)}} {\text{, ..., T}}^{\text{n-1}} {\text{, T}}^{\text{n}}$ the majority of which are carried out by conventional methods for the glass making industry, and in accordance with the terminology adopted by the glass making industry.

A structural compound is neither a physical nor mechanical mixture of components but is a special type of a true solution. It is an uncertain chemical compound representing a complex system characterized by two constituent parts, one unchangeable (principal part) and the other changeable. The part of a structural compound whose change leads to a change of the compound on the whole is understood as the principal part of the glass. The changeable part, on the contrary, can be subjected to changes and experience replacements. In order to identify only the constituent parts of a structural compound, they are denoted by the letter symbols, for example: A - unchangeable (principal) part, B - changeable part, and C - structural compound. Structural compound C can then be represented by two letter symbols (AB).

A phase is a homogeneous according to chemical composition part of the system.

To produce unchangeable (principal) part A and changeable part B of structural compound C, appropriate components, i.e. starting chemical compounds (for example Na₂O), or components containing starting chemical compounds (for example Na₂CO₃), and possible additional components (for example accelerators of physical and chemical processes) are mixed homogeneously in the amounts required to prepare the starting glass-forming mix of the prescribed chemical composition.

The components of the starting mix identified in the structural compound as part A are characterized by a) chemical elements entering into the composition of the starting chemical compounds whose cations carry a high charge, P⁵⁺, V⁵⁺, Si⁴⁺, Ti⁴⁺, Zn⁴⁺, Ge⁴⁺, B³⁺, Al³⁺, Fe³⁺ and the cations with similar crystal chemical behavior, b) Fe²⁺, Co²⁺, Ni²⁺, and c) chemical elements whose cations, Pb²⁺, Cd²⁺, Zn²⁺, Be²⁺, and the cations with similar crystal chemical behavior, which form stable coordination polyhedrons with the elements in Groups VI - VII of the periodic table (for example, with oxygen, MeOₙ).

The components of the starting mix identified in the structural compound as part B are characterized by a) chemical elements entering in the composition of the starting chemical compounds, Li⁺, Na⁺, K⁺, and those cations similar to their physical and chemical properties, b) Ca²⁺, Sr²⁺, B²⁺ and those cations similar to their physical and chemical properties, and c) chemical elements whose cations, Pb²⁺, Cd²⁺, Zn²⁺ and those cations similar to their physical and chemical properties, which do not form stable bonds with the elements in Groups VI-VII of the periodic table (for example with oxygen).

The mix prepared from these components is heated to the transition temperature of each component of the starting mix and turns into a melt.

The components of the starting mix lose their individuality in the melt and form structural compound C. Part A of structural compound C is a single three-dimensional anion in the form of a lattice, consisting either of individual macroparts each of which has a negative charge, or of macroparts bonded between themselves in either one or in two or in three directions having a single negative charge. Part B of structural compound C, which is active and mobile relative to part A, consists of randomly distributed metal ions in part A that, traveling under the action of a thermal field, establish groups or associations, and each ion (as a rule it has a positive charge) has a separate ionic bond with part A.

The melt formed from the starting components represents a new state of the starting components, and each melt exhibits the properties of an electrolyte and conducts electric current by its ions and electrons or only by ions and has two different constituent parts A and B, each of which is a charge carrier of the opposite sign distributed in the bulk that allows physical and chemical processes to arrange for their transport in the desired direction.

Physical and chemical processes${\text{T}}^{\text{n-m}} {\text{, T}}^{\text{n-(m+1)}} {\text{, T}}^{\text{n-(m+2)}} {\text{, ..., T}}^{\text{n-1}}$ are implemented in a melt under the action of thermal fields and electrical fields.

The thermal field causes thermal diffusion of positively charged mobile part B in the bulk of part A of the melt and leads to an intermediate state of part A. This intermediate state of part A is a consequence of the continual breakage and formation of the chemical bonds which distinguish it from the initial state of part A by the presence of a negative charge carrier existing for only a short period of time. The negative charge carrier of the intermediate state of part A can have, at the moment of its formation, electrons with a greater energy than the energy of other electrons of said part.

The electric and electrostatic fields or their combination prescribe a direction of the charge carriers' movement in the process of thermal diffusion, and lead to their orientation and/or displacement and to the extraction of electrons with a larger energy from the negative charge carriers of the intermediate state of part A of the melt, as well as lead, together with the action of the thermal field, to a change of the concentration of the active mobile part B in the melt, or the removal or partial removal of mobile part B from the melt, with or without formation of surplus positive charge in the remaining part of the melt.

Part A of the melt can be expressed by the following general formula:${\text{Me}}^{\text{q}} {}_{\text{m}} {\text{V}}^{\text{k}} {}_{\text{n}} \text{,}$ where:
Me^{q} - are the chemical elements identified as components of the starting mix for Part A;
V^{k} - are the chemical elements in Groups VI-VII of the periodic table, in particular, oxygen.

Part B of a melt can be written by a formula as follows:${\text{SMe}}^{\text{p}} {}_{\text{f}} \text{,}$ where:
Me^{p} - are the chemical elements identified as components of the starting mix for Part B.

The physical and chemical processes modify a melt in such a manner that the homogeneous system, represented by structural compound C in the form of the general formula${\text{SMe}}^{\text{p}} {}_{\text{f}} {\text{Me}}^{\text{q}} {}_{\text{m}} {\text{V}}^{\text{k}} {}_{\text{n}} \text{,}$ transitions into the macroheterogeneous system consisting of at least two phases: one phase is modified part A of structural compound C which can have an surplus positive space charge, and another phase is modified part B of structural compound C.

The transformation of the homogeneous system into the heterogeneous system consisting of at least two phases can take place according to a pattern as follows:${\text{SMe}}^{\text{p}} {}_{\text{f}} {\text{Me}}^{\text{q}} {}_{\text{m}} {\text{V}}^{\text{k}} {}_{\text{n}} {\text{→ r}}_{\text{f}} {\text{Me}}_{\text{f}} {\text{+ (S-r}}_{\text{f}} {\text{)Me}}^{\text{p}} {}_{\text{f}} {\text{Me}}^{\text{q}} {}_{\text{m}} {\text{V}}^{\text{k}} {}_{\text{n}}$ where:
r_{f}Me_{f} - is the modified part B of compound C;
(S-r_{f})Me^{p}_{f}Me^{q}ₘV^{k}ₙ - is the modified part A of compound C in the form of monomolecular and/or monocrystalline compounds which may have a surplus positive space charge;
i, j, f, m, n - are integers; and
r, S>0 - are real numbers.

The physical and chemical processes${\text{T}}^{\text{n-1}} {\text{, ..., T}}^{\text{n}} \text{,}$ are characterized by the reconstruction of chemical bonds in a high viscosity melt depleted of an active mobile part by the thermal and electrostatic (and those similar to their action) fields and are provided with the methods and equipment for producing, with simultaneous cooling, vitreous material of the desired geometry.

To produce the inorganic vitreous material from a melt of the starting mix, having the chemical composition required for the formation of prescribed structural compound C, it is necessary, according to this invention, to continuously conduct the physical and chemical processes.${\text{T, T}}^{\text{1}} {\text{, T}}^{\text{2}} {\text{, ..., T}}^{\text{n-m}} {\text{, T}}^{\text{n-(m+1)}} {\text{, T}}^{\text{n-(m+2)}} {\text{, ..., T}}^{\text{n-1}} {\text{, T}}^{\text{n}} \text{,}$ which occur in a technological (or process) cycle (from obtaining and preparation of the starting mix components to producing the end material) that can be divided into three technological (or process) operations: 1) obtaining a structural compound C based on the thermal dynamics laws; 2) changing the concentration of active mobile part B in the melt by the action of a combination of the thermal and electric and/or electrostatic and those similar to their action with removing part B from the melt (or its partial removal) with or without the formation of surplus positive charge in the remaining part of the melt; and 3) producing the inorganic vitreous material accompanied by recovering the metals removed from the melt and/or accompanied by the oxidizing of the metals removed from the melt, thus obtaining the components of the starting mix, with simultaneous recovery of heat released in the process of oxidizing of the metals.

Each technological (or process) operation and in the intervals between the operations of the process cycle for the production of inorganic vitreous material is implemented using known methods and equipment employed in the glass making industry. In the inventors' point of view, the most acceptable way of realizing the present invention can be based on the methods and apparatus employed for the production of float glass shown in Fig. 2.

The production of float glass is characterized by conducting the following steps: a) a number of sequential physical and chemical processes${\text{T, T}}^{\text{1}} {\text{, T}}^{\text{2}} {\text{, ..., T}}^{\text{n-m}} \text{,}$ using generally known equipment for obtaining and preparing the starting mix components, preparing the starting mix, and charging the starting mix in batches or continuously into furnace 50 which would be operating at the working temperature for obtaining a melt; b) a number of sequential physical and chemical processes${\text{T}}^{\text{n-m}} {\text{, ..., T}}^{\text{n-1}} \text{,}$ provided with the methods and equipment to transfer the melt from furnace 50 onto the molten metal (for example tin) in furnace 52 which would have the temperature conditions necessary to change the viscosity of the melt for the continuous production of industrial sheet glass polished with the molten metal; and c) a number of physical and chemical processes${\text{T}}^{\text{n-1}} {\text{, ..., T}}^{\text{n}} \text{,}$ provided with the methods and equipment for drawing the high viscosity melt from furnace 52 to produce industrial sheet glass of the desired geometry.

According to the invention a number of physical and chemical processes${\text{T, T}}^{\text{1}} {\text{, T}}^{\text{2}} {\text{, ..., T}}^{\text{n-m}} \text{,}$ are carried out sequentially by the methods and equipment employed in the glass making industry for the production of vitreous material, including those used for the production of float glass, which are characterized by that the starting mix is prepared from the following components (required to form structural compound C): a) a component represented by such compounds as fluorides of metals having higher valence or a mix of such fluorides, metal oxides having higher valence or a mix of such oxides, or bromides of metals having higher valence or a mix of such bromides; and b) a component represented by such compounds as oxides of univalent or bivalent metals or a mixture of univalent and/or bivalent oxides, fluorides of univalent or bivalent metals or a mixture of univalent and/or bivalent fluorides, or bromides of univalent or bivalent metals or a mixture of univalent and/or bivalent bromides. The components of the starting mix can be represented by other chemical compounds of metals with the elements in Groups VI-VII of the periodic table, as well as by the salts or mixture of salts (for example carbonates, sulfates, nitrates, or phosphates).

The prepared starting mix would be charged into furnace 50 in sequential batches or continuously heated to the temperature required for the formation of compound C, whose composition can be represented by the following formula:${\text{Me}}^{\text{p}} {}_{\text{f}} {\text{Me}}^{\text{q}} {}_{\text{m}} {\text{V}}^{\text{k}} {}_{\text{n}} \text{,}$

As a result of the physical and chemical processes, the components of the starting mix charged into furnace 50 would react with each other and modify in such a manner that the components would pass into the melt, and the end product of the reaction would be compound C, where we can identify constituent parts A and B being in ionic bond, i.e., a new state of the starting components.

The melt, exhibiting electrolyte properties irrespective of whether the starting components exhibited these properties or not and represented by structural compound C, would either flow from furnace 50 into furnace 52 by gravity or be transferred by use of mechanical devices.

According to the present invention, a number of physical and chemical processes${\text{T}}^{\text{n-m}} {\text{, T}}^{\text{n-(m+1)}} {\text{, T}}^{\text{n-(m+2)}} {\text{, ..., T}}^{\text{n-1}}$ are implemented using methods and equipment employed in the production of float glass, as well as the methods and equipment similar to those utilized for the production of float glass, with some fundamental modifications and additions, consisting in that the melt of structural compound C would be transferred from furnace 50 to furnace 52 through a device made from a material of low electric resistance being an anode of the electrochemical cell and using an existing technological element, molten metal (for example tin or lead), used for producing the float glass which, according to the invention, serves as a cathode of the electrochemical cell, and where an inner electric circuit would be created by the melt, which would exhibit electrolyte properties irrespective of whether the starting materials exhibited the electrolyte properties or not and conduct electric current by its ions and electrons or only by ions, permitting work to be done on their transport in the desired direction, and an outer electric circuit consisting of the elements usually used in an electrochemical cell.

In regular electrochemical cells, the ions, as separate structural units not having chemical (structural) bonding between themselves, on reaching the electrodes and coming in contact with them, gain and give away electrons going over into a state of neutral atoms or molecules and then flow up in the form of gas bubbles or settle out in the form of particles and/or are distributed in the starting electrolyte by thermal diffusion liberating a space near the electrodes for new ions. The efficiency of an electrochemical process depends greatly on the rate of renewal of the layer near an electrode by ions, and the electrochemical process can practically stop if the layer is renewed poorly or is not renewed at all.

As was noted above, the base of any structural compound is a matrix, being practically a single anion. When conducting an electrochemical process within the melt, the matrix initially gives up electrons into an outer electrical circuit of an electrochemical system only by the part being in contact with the anode, forming an electrically neutral layer. This layer is not renewed in the usual understanding as it takes place in the case of the regular electrolytes, and its renewing is possible only by a long spatial redistribution of the atoms and ions combined into a common lattice.

The problem of renewing a layer near the anode can not be resolved by the proper selection of the chemical composition of the starting materials to produce the structural compound with a lattice consisting of the microparts spatially distributed in the bulk of a melt. The microparts, being individual anions, will migrate, as in regular electrolyte, to the anode and be neutralized when coming in contact with it. The neutralized microparts, come in contact with the anode and each other and combine into a common electrically neutral layer preventing the neutralization of new microparts-anions, which accumulate in the bulk depleted of cations and which also come in contact with each other and join into a common electrically neutral layer near the anode, leading to the termination of the electrochemical process in the same manner as in the case with a structural compound having a common lattice.

The lack of renewal of a layer near the anode causes an increase of the electric field strength to values leading to decomposition of the structural compound in the layer near the anode, which starts when the voltage in the outer electrical circuit of the electrochemical cell reaches between about 1.6 and 2 volts. In the electric circuit of such an electrochemical cell, the process of removing the mobile part from the melt is inefficient.

The melt being transferred from furnace 50 into furnace 52, as shown in Fig. 3, moves through a device made of a low electrical resistance material, being an anode of an electrochemical cell, at a speed exceeding on its absolute value the speed of the matrix macroparts traveling to an anode under the action of electric forces and in a direction opposite to the direction of traveling of the melt macroparts. During the movement of the melt through a region near an anode, new lattice parts constantly come in contact with the anode and continuously give up electrons into an outer electric circuit of the electrochemical cell, thus renewing the layer and making possible the continuation of the classical electrochemical process with the anode-cathode processes, with the conduction in an inner circuit by electrons and ions, obtaining a material-conductor (or a source) of electrons and materials formed by like neutralized cations.

Fig. 7 shows a typical volt-ampere characteristic of the electrochemical process for a multicomponent system. The process of neutralization of charge carriers at the cathode whose magnitude, charge sign and nature are identical (cathode processes include the disassociation and transport processes) and/or the processes of neutralization of the charge carriers at the anode whose magnitude, charge sign and nature are identical (anode processes include the disassociation and transport processes) are characterized by their own volt-ampere characteristic and by an ultimate current whose magnitude can change upon full completion of an anode (and/or cathode) process or upon completion of one anode (and/or cathode) process and the beginning of another anode (and/or cathode) process due to the presence in the melt of like charge carriers but of different nature. The anode (and/or cathode) processes occur sequentially, starting from that process with a current value which is less than the ultimate current values of the other anode (and/or cathode) processes.

For the melt of the starting mix, the anode process in the electrochemical cell, characterized by the extraction of electrons from part A, does not change during the entire electrochemical process since the nature of the charge carrier does not change (part A). In the electrochemical cell with a moving melt, a change of current is only possible with a change of the cathode processes if there are cations of different natures present. The ultimate current value (with maximum and required voltage corresponding to the current) for one cathode process is achieved in the event of the appropriate surface and configuration of the anode (cathode), speed of movement, and melt viscosity.

The melt in furnace 52 would flow on the tin cathode of the electrochemical cell, and the melt flow should not contact the walls of the tin bath. The freely flowing melt would reach some maximum surface contact with the cathode over its entire surface and have the shape of a drop stretched in the direction of the melt movement. The cathode processes would commence at the place where the melt flow falls down and contacts the molten tin and finishes within the drop at its largest width diameter. The length of the contact surface, where the cathode process takes place, and the duration of the cathode process are defined by the objective physical and chemical processes in the melt (for example, relatively high viscosity melt).

As a matter of fact, the cathode process is characterized by the neutralization of the cations available within a cathode surface, and the intensity of neutralization is proportional to the number of cations extracted from part A at the anode.

The relationship of the cathode and anode surfaces and the length of the anode surface define the current density value in the circuit of the electrochemical cell and are determined in order to achieve the ultimate current density value for each specific chemical composition of the starting mix. Consequently, these factors define the efficiency of removal of active mobile part B of the melt and, according to the present invention, lead to the formation of the macroheterogeneous system from the homogeneous system consisting of at least two phases. ${\text{Me}}^{\text{p}} {}_{\text{f}} {\text{Me}}^{\text{q}} {}_{\text{m}} {\text{V}}^{\text{k}} {}_{\text{n}} {\text{--> rMe}}^{\text{p}} {\text{+ Me}}^{\text{p}} {}_{\text{f-r}} {\text{Me}}^{\text{q}} {}_{\text{m}} {\text{V}}^{\text{k}} {}_{\text{n}}$where:
Me^{p}_{f-r}Me^{q}ₘV^{k}ₙ - is the modified part A of structural compound C,
rMe^{p} - is the modified part B of structural compound C.

The melt, represented by structural compound C in which part A contains electrons having greater energy than other electrons entering into the composition of the chemical elements constituting the matrix, would flow by gravity, or would be transferred by some mechanical device from furnace 50 to furnace 52.

According to the invention, a number of physical and chemical processes${\text{T}}^{\text{n-m}} {\text{, T}}^{\text{n-(m+1)}} {\text{, T}}^{\text{n-(m+2)}} {\text{, ..., T}}^{\text{n-1}}$ are realized by means of the methods and equipment used for production of float glass as well as the methods and equipment similar to producing float glass, but with some changes and additions consisting in that the melt of structural compound C would be transferred from furnace 50 through a glass removing device into furnace 52 onto a molten metal (for example tin or lead used for the production of float glass) which is a negative electrode of the electrostatic field whose positive electrode would be positioned over the melt and separated from the melt by an inert, relative to the melt, current conducting medium (for example, a gas medium), and according to the present invention both electrodes would be the elements of an electric circuit in which the removal of mobile active part B from the melt takes place.

In furnace 52, the melt would move on the tin or together with the tin (Figure 3) which serves as a negative electrode of the electrostatic field. The second electrode (positive) would have no contact with the melt and would be separated by a dry, inert, current conducting medium in such a manner that it would set up the electrostatic field perpendicular to the melt movement, and both electrodes would be connected to the source of voltage forming an external electric circuit. The size of the positive electrode would be preset in such a way that the electric discharges between the electrodes and the furnace materials and with the tin surface not occupied by the melt would not initiated. In addition, the positive electrode surface area would overlap the maximum melt surface area.

In the melt of the starting mix represented by structural compound C, part A has unstable regions, arising under the action of the thermal field which causes mechanical stress, which are explained by the availability of micrononhomogeneity in the melt and which are
characterized by the unstable intermediate state. In this state (when the old chemical bonds are loosened and/or broken, and the new bonds are established), at the moment of breakage of the chemical bond, an electron has a charge with the local functional value equal to an elementary charge. The energy of this electron can be greater than the energy of other electrons forming the chemical bonds in part A.

The strong electrostatic field, with the strength of sufficient value not leading to a breakdown in the inert gas, acting on the mobile cations in part B of the melt, would displace them and, together with the action of the thermal field of a sufficient temperature value (when the breakage of the chemical bonds is greatest, one of the conditions required for the diffusion of cations in the bulk of the lattice), would lead to the transport of cations of part B in the direction of the negative electrode and an increase in the energy of the electrons to an energy sufficient to extract them from the lattice without its decomposition. The electrons having energy essentially greater than the energy of other electrons constituting the chemical bonding of structural compound C would be extracted first.

The unbound electrons, (electrons extracted from the lattice) moving in the direction of a positive electrode, and cations moving in the direction of a negative electrode, would create current in an electric circuit comprising the melt, the inert current conducting medium and the elements establishing the electrostatic field. The current in a thus formed electric circuit would define the amount of work done on transport, neutralization and removal of mobile part B from the melt. This corresponds to the process in the electrochemical cell with the difference that: a) the inner circuit consists of the melt and the inert current conducting medium (for example, ionized gas); b) the anode and the cathode are the electrodes of the electric circuit establishing the electrostatic field; and c) the anode is not in contact with the melt, eliminating the formation of a layer near the anode, and the processes associated with layer renewal and/or decomposition and the anode processes, typical of a regular electrochemical cell, and their affect on the characteristic of a change of a current in the electric circuit.

The change of the current in the electric circuit of the electrostatic field occurs from the moment of appearance of the current in the inert current conducting medium to the moment of achieving the ultimate current in the inert current conducting medium (for at least one cathodic process). The voltage of this electric circuit is defined by the value not causing a breakdown in the inert current conducting medium. A further change of current will take place only in case of a change of those cathodic processes that are feasible within the said voltage limits.

The change of the cathode processes causes an increase of the current in the electric circuit to the new ultimate values and occurs due to different kinetics in the transfer of part B cations of different nature or due to the different value of their charge carrier (in case of their availability in a melt). This occurs within the voltage value in the external electric circuit not resulting in an electric breakdown in the inert current conducting medium.

A set of processes occurring in the melt in furnace 52 under the action of the thermal field in the electric circuit formed by the elements involving the melt, the inert current conducting medium (internal electric circuit), as well as the negative electrode of the electrostatic field whose positive electrode is separated from the melt by the inert current conducting medium, create the conditions for the removal of active mobile part B of the melt in the electrochemical process which, according to present invention, gives rise to the formation of the macroheterogeneous system from the homogeneous system consisting of at least two phases${\text{Me}}^{\text{p}} {}_{\text{f}} {\text{Me}}^{\text{q}} {}_{\text{m}} {\text{V}}^{\text{k}} {}_{\text{n}} {\text{--> rMe}}^{\text{p}} {\text{+ Me}}^{\text{p}} {}_{\text{f-r}} {\text{Me}}^{\text{q}} {}_{\text{m}} {\text{V}}^{\text{k}} {}_{\text{n}}$ where:
Me^{p}_{f-r}Me^{q}ₘV^{k}ₙ - is modified part A of structural compound C
rMe^{p}- is modified part B of structural compound C.

The modification of part B having a common positive charge in structural compound C takes place in the process of neutralization of separate cations by electrons extracted by the electrostatic field from the lattice. When the total number of electrons extracted from the lattice per unit of time exceeds the number of cations being neutralized at the cathode, then they can move, for example, in the direction of the zero potential.

In this case, these electrons in the electrical circuit (as shown on Fig. 5) consisting of the electrode made of low electrical resistance material gaining (absorbing) electrons in the electrostatic field and positioned so that the electrochemical process does not stop or a change of the values characterizing the process can be ignored, would establish current if the electrode is connected by a conductor to any surface whose potential is different from the potential of the electrode absorbing the electrons, and a surplus positive charge distributed in the bulk would be formed in structural compound C.

In the case when the cations of active mobile part B of structural compound C are not transferred to the cathode and are unable to receive free electrons and be neutralized, it is possible in case of high viscosity of the structural compound and when the cations of the active mobile part travel chiefly in the bulk occupied by a group of cations, the transfer of electrons would be possible practically in the direction of a lesser potential only. These conditions would permit to produce a maximum surplus positive charge in structural compound C under the action of the thermal and electrostatic fields.

The method and facilities for the production of float glass envisage the presence of the temperature conditions in furnace 52 to change the viscosity and availability of the temperature zones where the desired viscosity is ensured to create the conditions to obtain a maximum surplus positive charge in structural compound C for which the appropriate elements of the electric circuit are arranged and the electrostatic field is established in the temperature zones of furnace 52.

The combination of the thermal and electrostatic fields would lead to a change of concentration of active mobile part B in the melt, to its removal from the melt or a partial removal, with the formation (when all electric circuits are closed), or without the formation (when not all electric circuits are closed), of a surplus positive charge distributed in the bulk of the remaining part of the melt maintained by the electrostatic field.

The melt, exhibiting the properties of an electrolyte irrespective of whether the starting components exhibited these properties or not and represented by structural compound C, in which part A contains electrons having greater energy than other electrons entering into the composition of the chemical elements constituting the matrix, would be transferred spontaneously or by some mechanical device from furnace 50 into furnace 52.

According to the present invention, a number of physical and chemical processes${\text{T}}^{\text{n-m}} {\text{, T}}^{\text{n-(m+1)}} {\text{, T}}^{\text{n-(m+2)}} {\text{, ..., T}}^{\text{n-1}}$ are implemented by means of the methods and equipment employed for the production of float glass, as well as the methods and equipment similar to those utilized for the production of float glass, with some fundamental modifications and additions constituting the subject of this invention, consisting in that the melt of structural compound C would be transferred from furnace 50 into furnace 52 through the device made from a material of low electric resistance being an anode of the electrochemical cell and also comprising an existing technological element, molten metal (for example, tin or lead), used for producing float glass which according to the invention serves as a cathode of the electrochemical cell and at the same time is a negative electrode of the electrostatic field whose positive electrode is placed over the melt and is separated from it by the inert current conducting medium (for example, by a gas medium). The inner electric circuit of the electrochemical cell is established by the melt which conducts electric current by its ions and electrons or only by ions, and the inner electric circuit, whose electrochemical process in the electric circuit of the electrostatic field is the result of a current passing through it, is created by the melt and the inert current conducting medium and according to the invention the outer electric circuits, completing the inner circuits, consist of the elements usually employed in an electrochemical cell to implement the electrochemical process.

A traditional electrochemical process in the melt of the glass-forming mixture represented by structural compound C, whose part A is practically a single anion and cations of part B are active and mobile in part A, proceeds in two phases with the formation at the first phase of an electrically neutral layer near an anode, represented by the chemical elements of part A, and the establishment of an electric field in the thickness of the layer. The second phase is characterized by the decomposition of the electrically neutral layer near the anode by the electric field.

The result of both phases of the electrochemical process is the product of the decomposition chemical elements of part B (for example sodium) and of decomposed part A (for example silicon and oxygen). That is, in a traditional electrochemical process, the decomposition of the material (of structural compound C) obtained in the melt takes place and application of this process does not permit to obtain part A in the form of material completely or partially depleted of part B. The application of said melts in the traditional electrochemical processes for the industrial production of separate chemical elements in the form of some materials is inefficient due to incomparably great and unavoidable power and other material consumption required for the process of the complete decomposition of multicomponent structural compound C in the state of a melt.

A traditional electrochemical process in the melt starts, at its first phase, from the neutralization of that part of the lattice which is in contact with the anode giving away electrons into the outer circuit of the electrochemical cell. The process of neutralization of one part of the lattice occurs without disturbing the structural bonds combining it with other parts of the lattice, forming near the anode a single three-dimensional electrically neutral layer, being essentially a continuous extension of the lattice, represented only by those chemical elements which constitute part A.

Conservation of the lattice with the formation of an electrically neutral layer as a unit does not mean that the continuous neutralization of other parts of the lattice (having a negative charge and being a single anion) will follow after neutralization of that part of the lattice which formed the electrically neutral layer. The process of the transfer of electrons to an anode along structural bonds or some other way in the lattice, including in this electrically neutral layer, is required as a minimum and is ruled out under normal conditions since the lattice is a dielectric. This dielectric can only become a conductor by applying a high breakdown voltage accompanied by the decomposition of the material, so there is no sense to conduct this process if the goal is to conserve the lattice as a unit and to obtain it in the form of material.

The neutralization of the lattice terminates with the formation of the electrically neutral layer due to the absence of conduction in it, and the current in the electrical circuit stops. Accordingly, the electrical voltage which corresponds to the electrochemical process reaches a value or range of values which result in conservation of the lattice.

The positive charge of the anode and the negative charge of the lattice, not including the neutralized part (electrically neutral layer), create a potential difference resulting in the establishment of the electric field in a thickness of the electrically neutral layer near the anode with an intensity, because of the small thickness of the electrically neutral layer, reaching the value required to decompose the layer when the voltage in the outer electric circuit of the electrochemical cell reaches between about 1.6 and 2V.

Since all the atoms of the lattice are bonded between themselves in a three-dimensional spatial structure comprising the electrically neutral layer and maintain the structural bonding in at least one direction, the layer near the anode is not renewed as in the case with the electrolytes where atoms and ions are separate structural units allowing ions to be transported by the electric field to the electrodes. The number of ions in the layer near the anode is in a dynamic state with neutralized ions which are constantly renewed, retaining the quality of the separate structural units and a continuity of the current in the electric circuit.

The renewing of the layer near the anode by anions in the same manner as in electrolytes is impossible, since, when part A in the melt consists of spatially separated macroparts (anions in the form of separate structural units), as the macropart-anions in the layer near the anode are neutralized and make a firm union with each other, they form a single layer preventing the neutralization of other macropart-anions. In said melt, the electrically neutral layer is renewed under the conditions of a long spatial redistribution of atoms and ions combined in a single lattice.

The lack of conduction in part A of structural compound C and also the lack of renewing of the electrically neutral layer near the anode, in a regular sense as it takes place with electrolytes, are the reasons for the increasing of the electrostatic field intensity to the values leading to the decomposition of the structural compound in the layer near an anode. In the electric circuit of such electrochemical cell, the process of removing the mobile part from the melt is inefficient.

A set of physical and chemical processes leading to the formation in the electrochemical cell and in the electrostatic field (simultaneously closed circuits) not causing the decomposition of the lattice near the anodes would occur in the melt flowing out of furnace 50 through a region near the anode onto a cathode in furnace 52, which would be simultaneously a cathode of the other electric circuit creating the electrostatic field. The decomposition of the lattice in such a combination of the electric and electrostatic fields would not take place, and the mobile part of the melt would be removed efficiently.

The melt being transferred from furnace 50 into furnace 52 (Fig. 3) would move through a device made of a low electrical resistance material, being an anode of the electrochemical cell, at a speed exceeding on its absolute value the speed of the matrix macroparts traveling to an anode under the action of electric forces and in the direction opposite to the direction of traveling of the melt macroparts. During the movement of the melt through a region near the anode, the new lattice parts would constantly come in contact with the anode and would continuously give up electrons into an outer electric circuit of the electrochemical cell. The renewing of the layer and the classical electrochemical process with the anode-cathode processes and conduction in the inner circuit by electrons and ions would then take place.

The melt in furnace 52 would flow on the tin cathode of the electrochemical cell and should not reach the walls of a tin bath. The freely flowing melt would have maximum surface contact with the cathode and would move on the tin or together with the tin which serves as a negative electrode of the electrostatic field. The second electrode (positive) would have no contact with the melt and would be separated by the inert current conducting medium in such a manner that it would set up the electrostatic field perpendicular to the melt movement, and both electrodes would be connected to the source of voltage forming an external electric circuit. The size of the positive electrode of the electrostatic field would be preset in such a way that electric discharges between the electrode and the furnace materials as well as between the electrode and the tin surface not occupied by the melt would not occur. At the same time, the positive electrode surface area would overlap the maximum surface area of the melt.

The electrostatic field, with the strength of sufficient value not leading to a breakdown in the inert current conducting medium, acting on the mobile cations in part B of the melt, would displace them and, together with the action of the thermal field of a sufficient temperature value (when the breakage of the chemical bonds is greatest, one of the conditions required for the diffusion of cations in the bulk of the lattice), would lead to the transport of cations of part B in the direction of the negative electrode and an increase in the energy of the electrons to the energy sufficient to extract them from the lattice. The electrons having energy essentially greater than the energy of other electrons constituting the chemical bonding of structural compound C would be extracted first. Such electrons can be formed in the intermediate state of part A, which is a consequence of the breakage and the formation of the chemical bonds at the moment of the breakage of the chemical bonding.

The unbound electrons (electrons extracted from the lattice) moving in the direction of the positive electrode and cations moving in the direction of the negative electrode would create current in the electric circuit comprising the melt, the inert current conducting medium and elements establishing the electrostatic field. The current in a thus formed electric circuit would define an amount of work done on transport, neutralization and removal of active mobile part B from the melt, the same way as in an electrochemical cell.

A set of the processes in the thermal field in the electrochemical cell with the melt moving in the electric circuit comprising the melt, inert current conducting medium and elements creating the electrostatic field in the thermal field would provide the most efficient conditions for the removal of active mobile part B which, according to the present invention, results in the formation of the macroheterogeneous system from a homogeneous system consisting of at least two phases:${\text{Me}}^{\text{p}} {}_{\text{f}} {\text{Me}}^{\text{q}} {}_{\text{m}} {\text{V}}^{\text{k}} {}_{\text{n}} {\text{--> rMe}}^{\text{p}} {\text{+ Me}}^{\text{p}} {}_{\text{f-r}} {\text{Me}}^{\text{q}} {}_{\text{m}} {\text{V}}^{\text{k}} {}_{\text{n}}$ where
Me^{p}_{f-r}Me^{q}ₘV^{k}ₙ - is modified part A of structural compound C
rMe^{p} - is modified part B of structural compound C.

In the case when the total number of the electrons given away by the lattice of the structural compound in the electrochemical cell by means of the electrostatic field with an anode not contacting with the melt would exceed in a unit of time the number of cations of active mobile part B being neutralized at the cathode, then the electrons would move in the direction of a potential equal to zero which allows the creation of an electric circuit for the movement of the electrons in a direction of the potential equal to zero. This electric circuit would allow the storing of a surplus positive charge distributed in the bulk of structural compound C.

In the event when the cations of active mobile part B of structural compound C are not transferred to the cathode and are unable to receive free electrons and be neutralized, it is possible in case of high viscosity of the structural compound and when the cations of the active mobile part travel in the main bulk occupied by a group of cations, the transfer of electrons is possible practically in the direction of a lesser potential only. From the authors' point of view, these conditions permit to produce a maximum surplus positive charge in structural compound C.

The method and facilities for the production of float glass envisage the presence of the temperature conditions in furnace 52 to change the melt viscosity and availability of the temperature zones where the desired viscosity would be ensured to obtain a maximum surplus positive charge in structural compound C for which the appropriate elements of the electric circuit would be arranged and the electric and electrostatic fields would be combined in said temperature zones of furnace 52.

The combination of the thermal, electric and electrostatic fields would lead to the change of concentration of active mobile part B in the melt, to its removal from the melt or a partial removal, with the formation (when all electric circuits are closed), or without the formation (when not all electric circuits are closed), of a positive charge distributed in the bulk of the remaining part of the melt.

A number of physical and chemical processes${\text{T}}^{\text{n-1}} {\text{, ..., T}}^{\text{n}}$ are characterized by the reconstruction of the chemical bonds in a high viscosity melt depleted of part B and implemented during the drawing of the melt in the zone of furnace 52 having temperature conditions to change the melt viscosity to the values and for the time required for the completion of relaxation processes and a full transition of structural compound C into a solid phase.

The supercooling of the melt available in a zone of the cathode process down to a glass transition temperature in the process of drawing and the work of the electrochemical cell and/or the electrostatic field would result, in a period of termination of the relaxation processes, in the obtaining of the glass with the structure and concentration of chemical elements and compounds corresponding to the structure and concentration of the chemical elements and compounds of the melt and with an excess positive charge (in case when all the electric circuits are closed) acquired by the melt in the electrochemical process and retained by the electrostatic field.

In the temperature zones of furnace 52, there would be such a region where the viscosity of the structural compound achieves values ensuring stable geometry of the material produced outside the molten metal cathode zone. The action of the thermal field in such a zone would be sufficient in order for the electrical circuits arranged in this zone to efficiently create a space positive charge when both electrodes (made of low electrical resistance material) of the electrostatic field are at a certain distance of the material produced.

In the conditions of the electrostatic field of the intensity equal to the intensity of the field at the moment of obtaining the greatest charge of the vitreous material, an excess positive charge formed in the conditions of the same temperatures and combinations of the electrical circuits but with preliminary obtained glass sheet of required dimensions and placed statically between the electrostatic field electrodes not contacting with a glass sheet (Fig. 6) can exist. A glass sheet of the required dimension can be obtained from the continuously moving glass strip of the initial composition or depleted of the active mobile part of the melt as it is made in the production of float glass sheet.

The surplus positive charge of the glass would be neutralized by the electrons from the environment and/or by the organized current of the electrons when a current in the electric circuit of the electrochemical cell (in case of its availability) is interrupted, and there is the electric circuit in which the electrodes of the electrostatic field are discharged.

The thus obtained material would contain the unbound electrons not coming into the glass structure, since irreversible structural changes would take place as a result of the electrochemical process in the melt characterized by that upon completion of the process the melt acquires energy equilibrium corresponding to the external conditions but with other (than before the start of the process) relative positions of the atoms and ions where there are no structural bonds which would define an energy state and presence of an electron in the structure before its extraction from part A.

The transition of an electron in structural compound C from a chemically bonded state (electron) into a state of an unbound electron with binding energy defined by Van der Waals forces enables the storing of electrical energy in glass and to arrange electron current in a direction of a lesser potential in an electric circuit comprising an electrode of a low electrical resistance material and an electric voltage source.

The technological conditions for renewal of the continuously saturated by the neutralized cations molten metal cathode and its accumulation for the subsequent treatment (processing) by the known methods aimed at producing pure metals represented in the melt by the cations and/or their oxidizing to the starting components of a mix and recovery of heat being released in an oxidizing process are ensured by the facilities in the zones of furnace 52. The technological conditions and the facilities in furnace 52 make it possible to draw a high viscosity melt depleted of the active mobile part B prior to the obtaining the vitreous material represented by the chemical elements with the desired sizes, geometry, technical characteristics and consumer qualities according to the following pattern: ${\text{Me}}^{\text{p}} {}_{\text{f}} {\text{Me}}^{\text{q}} {}_{\text{m}} {\text{V}}^{\text{k}} {}_{\text{n}} {\text{--> rMe}}^{\text{p}} {\text{+ Me}}^{\text{p}} {}_{\text{f-r}} {\text{Me}}^{\text{q}} {}_{\text{m}} {\text{V}}^{\text{k}} {}_{\text{n}} \text{.}$

A number of physical and chemical processes${\text{T}}^{\text{n-1}} {\text{, ..., T}}^{\text{n}}$ establish the conditions required for reconstruction of the chemical bonds in a high viscosity melt depleted of an active mobile parts, and then the drawing of a mobile active part is carried out in the zone of furnace 52 having temperature conditions to change the viscosity until the completion of the relaxation processes and complete transition of the structural compound in a solid phase.

For example, in order to produce the quartz-like vitreous material (SiₘOₙ) from the melt of the starting mix having chemical composition (SNa₂CO₃+rSiO₂) required for the formation of prescribed structural compound C (SNa₂rSiO_{(2r+S)}), it is necessary, according to this invention, to continuously conduct the physical and chemical processes${\text{T, T}}^{\text{1}} {\text{, T}}^{\text{2}} {\text{, ..., T}}^{\text{n-m}} {\text{, T}}^{\text{n-(m+1)}} {\text{, T}}^{\text{n-(m+2)}} {\text{, ..., T}}^{\text{n-1}} {\text{, T}}^{\text{n}} \text{,}$ proceeding in a technological (or process) cycle (from obtaining and preparation of the starting mix components to producing the end material) that can be divided into three below stated technological (or process) operations.

Each technological operation (and in the intervals between the operations) of the process cycle of producing of the quartz-like vitreous material (SiₘOₙ) is implemented by the methods and equipment including those known employed in the glass making industry.

According to the present invention a number of physical and chemical processes${\text{T, T}}^{\text{1}} {\text{, T}}^{\text{2}} {\text{, ..., T}}^{\text{n-m}} \text{,}$ are sequentially implemented by using methods and equipment employed in the production of float glass, as well as using the methods and equipment similar to those utilized for the production of float glass, when, to obtain unchangeable (principal) part A and changeable part B of structural compound C (SNa₂rSiO_{(2r+S)}), appropriate components of the starting chemical compound in the form of synthesized silicon oxide (SiO₂) or a component in the form of quartz sand comprising the starting chemical compound (SiO₂) and a component in the form of ash soda (Na₂CO₃) comprising the staffing chemical compound in the form of (Na₂O), are produced (or quarried) and processed to the desired quality (for example, after obtaining of the prescribed content of additives, fractions with predetermined particle size and moisture content), an accumulation is made at the production site for the continuous work with an adequate storage procedure, and the components are mixed in batches homogeneous in the amounts required to obtain the starting chemical composition${\text{SNa}}_{\text{2}} {\text{CO}}_{\text{3}} {\text{+ rSiO}}_{\text{2}}$ where S and r are the amount of the components in the mix by weight to obtain structural compound C with the preset concentration of components.

The components of the starting mix identified in the structural compound as part A are characterized by that chemical element silicon (Si) entering into the composition of the starting chemical compound (SiO₂) whose cations carry a high charge ( Si⁴⁺) which form, in combination with the element oxygen (O) in Group VI of the periodic table stable coordination polyhedrons (SiO₄).

The components of the starting mix identified in the structural compound as part B are characterized by that chemical element sodium (Na) entering in the composition of the starting chemical compound (Na₂O) whose cation (Na⁺) does not form in combination with the element oxygen (O) in Group VI of the periodic table a stable bond.

The prepared starting mix would be charged in sequential batches or continuously into furnace 50 and heated to the temperature required for the formation of compound C, whose weight, chemical composition and concentration of chemical elements can be represented by the following formula${\text{SNa}}_{\text{2}} {\text{rSiO}}_{\text{(2r+S)}} \text{.}$

As a result of the physical and chemical processes, the components of the starting mix, soda ash (Na₂CO₃) and quartz sand (SiO₂) charged into furnace 50, would react with each other and modify in such a manner that the components (Na₂CO₃) and (SiO₂) would pass into the melt and the end product of the reaction is carbon dioxide (CO₂) and compound C ${\text{SNa}}_{\text{2}} {\text{CO}}_{\text{3}} {\text{+ rSiO}}_{\text{2}} {\text{→ SNa}}_{\text{2}} {\text{O + rSiO}}_{\text{2}} {\text{+SCO}}_{\text{2}} {\text{↑ → SNa}}_{\text{2}} {\text{rSiO}}_{\text{(2r+s)}}$where we can identify constituent parts A and B being in ionic bond, i.e., a new state of the starting components.

Accordingly part A of the melt, depending on the prescribed concentration, would either be a single three-dimensional anion in the form of a lattice of silicon (Si) and oxygen (O) combined with each other by the chemical bond, or individual macroparts each of which has a negative charge or macroparts bonded between themselves in either one or in two or in three directions and having a common negative charge, and part A of the melt can be represented by the following general formula:${\text{r SiO}}_{\text{(2r+s)}}$ where
Si - chemical element identified as a component of part A;
O - chemical element in Group VI of the periodic table

Accordingly, part B of the melt (active and mobile relative to part A) would consist of cations of sodium (Na⁺) randomly distributed in part A that travel under the action of the thermal field and establish groups or associations (but not the crystals), and each cation (Na⁺) has a separate ionic bond with part A, and part B of the melt can be represented by the following general formula:$\text{SNa2}$ where
Na - is the chemical element identified as a component of part B.

The melt, exhibiting the properties of an electrolyte in spite of the fact that the starting components (Na₂O) and (SiO₂) did not exhibit these properties and represented by structural compound C (SNa₂rSiO_{(2r+S)}), in which part A contains electrons having greater energy than other electrons entering into the composition of the chemical elements constituting the matrix, would be transferred by gravity or by some mechanical devices from furnace 50 into furnace 52, where the electrochemical process and the change of concentration of part B (SNa₂) in structural compound C (SNa₂rSiO_{(2r+S)}) in the thermal, electric and electrostatic fields would take place.

The electrochemical process in the melt comprises according to the present invention a number of physical and chemical processes${\text{T}}^{\text{n-m}} {\text{, T}}^{\text{n-(m+1)}} {\text{, T}}^{\text{n-(m+2)}} {\text{, ..., T}}^{\text{n-1}} \text{,}$ which are implemented by means of the methods and equipment employed for the production of float glass, as well as the methods and equipment similar to those utilized for the production of float glass, with some fundamental modifications and additions consisting in that the melt of structural compound C (SNa₂rSiO_{(2r+S)}) would be transferred from furnace 50 into furnace 52 through the device made of the material of low electric resistance platinum (Pt) being an anode of the electrochemical cell and also comprising an existing technological element onto the molten metal (tin (Sn) used for producing float glass) which according to the invention serves as the cathode of the electrochemical cell and at the same time is the negative electrode of the electrostatic field whose positive electrode is placed over the melt and separated from it by an inert (with respect to the melt) current conducting nitrogen (N₂) medium. The inner electric circuit of the electrochemical cell would be established by the melt which conducts electric current by its ions and electrons or only by ions, and the inner electric circuit, whose electrochemical process in the electrostatic field is an outcome of a current passing through it, would be created by the melt and the inert current conducting nitrogen (N₂) medium and according to the invention the outer electric circuits, closing the inner circuits, would consist of the elements usually employed in an electrochemical cell to implement the electrochemical process.

The melt would move from furnace 50 into furnace 52 (Fig. 3) through a glass removing device made of platinum (Pt), being an anode of the electrochemical cell at a speed exceeding on its absolute value the speed of the matrix macroparts traveling to the anode under an action of electric forces and in the direction opposite of the direction of traveling of the melt macroparts. During the movement of the melt through the region near the anode, the new lattice parts would constantly come in contact with the anode and would continuously give up electrons into an outer electric circuit of the electrochemical cell, and the renewing of a layer and the classical electrochemical process, with the anode-cathode processes, with a conduction in the inner circuit by electrons and ions would take place.

The melt in furnace 52 would flow on the tin cathode of the electrochemical cell, and should not reach the walls of the tin bath. The freely flowing melt would have maximum surface contact with the cathode and would move on the tin, or together with the tin, which serves as the negative electrode of the electrostatic field. The second electrode (positive) would have no contact with the melt and would be separated from it by the inert current conducting nitrogen medium in such a manner that it would set up the electrostatic field perpendicular to the melt movement, and both electrodes would be connected to the source of voltage forming an external electric circuit. The size of the positive electrode of the electrostatic field would be preset in such a way that the electric charges between the electrode and the furnace materials, as well as between the electrode and the tin surface not occupied by the melt, would not be produced. At the same time, the positive electrode surface area would overlap the maximum surface area of the melt of the starting mix.

The electrostatic field, with the strength of sufficient value not leading to a breakdown in the inert current conducting nitrogen medium, acting on the mobile cations in part B (Na⁺) of the melt, would displace them and, together with the action of the thermal field of a sufficient temperature value (when the breakage of the chemical bonds is greatest, one of the conditions required for the diffusion of cations in the bulk of the lattice), would lead to the transport of cations of part B (Na⁺) in the direction of the negative electrode and an increase in the energy of the electrons to the energy sufficient to extract them from the lattice. The electrons having the energy essentially greater than the energy of other electrons constituting the chemical bonding of structural compound C (SNa₂rSiO_{(2r+S)}) would be extracted first. Such electrons can be formed in the intermediate state of part A (rSiO_{(2r+S)}), which is a consequence of the breakage and the formation of the chemical bonds.

Part A (rSiO_{(2r+S)}), formed by chemical bonds of the type ≡Si―O―Si≡, is characterized by the intermediate states of ≡Si―O^{- +}Si≡, as a consequence of the action of thermal field and mechanical stresses, and at the moment of breakage of the chemical bonds, a part of the ≡Si―O⁻ lattice has a charge equal to a unit charge with the local functional value. The electron defining a charge of the part ≡Si―O⁻ lattice, at the moment of breakage of the chemical bond can be at a higher energy level than the electrons forming Si―O bonds, i.e., in the process of the extraction of an electron in an electrostatic field of sufficient strength the electrons participating in the formation of Si―O chemical bonds will not be extracted and part A (rSiO_{(2r+S)}), modifying in the relaxation processes, will be preserved.

The unbound electrons moving in the direction of the positive electrode and cations of part B (Na⁺) moving in the direction of a negative electrode would create current in the electric circuit comprising the melt, the inert current conducting nitrogen medium and the elements establishing the electrostatic field. The current in a thus formed electric circuit would define an amount of work done on transport, neutralization and removal of the active mobile part B (Na⁺) from the melt, the same way as in an electrochemical cell.

A set of the processes in the thermal field in the electrochemical cell with the melt moving in the electric circuit comprising the melt, the inert current conducting nitrogen medium and the elements creating the electrostatic field in the thermal field would provide the most efficient conditions for the removal of active mobile part B (Na⁺) which according to the present invention results in the formation of the macroheterogeneous system from a homogeneous system consisting of at least two phases: ${\text{SNa}}_{\text{2s}} {\text{rSiO}}_{\text{(2r+S)}} {\text{→ SNa + rSi}}_{\text{j}} {\text{O}}_{\text{i}}$where:
SNa - is phase B', essentially a modified part B of structural compound C;
rSiⱼOᵢ - phase A', essentially a modified part A of structural compound C.

The said physical and chemical processes include also the processes of dissolving sodium (Na) in the tin.

In a case when the total number of the electrons given away by the lattice of the structural compound in the electrochemical cell by means of the electrostatic field with an anode not in contact with the melt would exceed in a unit of time the number of cations of active mobile part B (Na⁺) being neutralized at the cathode, the unbound electrons would be moving to ground through the ground electrode in the melt closed electric circuit, and a surplus positive charge distributed in the bulk would be stored in structural compound C (SNa₂rSiO_{(2r+S)}) accordingly.

The method and facilities for the production of float glass envisage the presence of the temperature conditions in furnace 52 to change the melt viscosity and availability of the temperature zones where the melt viscosity reaches the values when the cations of active mobile part B (Na⁺) of structural compound C (SNa₂rSiO_{(2r+S)}) are not transferred to the cathode and are unable to receive free electrons and be neutralized any longer and travel chiefly in the bulk occupied by a group of cations, and unbound electrons are transported practically only to ground in the ground electrode in the melt closed electric circuit, and a maximum surplus positive charge is achieved in structural compound C (SNa₂rSiO_{(2r+S)}) under the action of the thermal, electric and electrostatic fields.

The physical and chemical processes proceed in the high viscosity melt depleted of part B (Na⁺) moving either on the molten tin bath (or together with the molten tin) and outside the tin bath${\text{T}}^{\text{n-1}} {\text{, ..., T}}^{\text{n}} \text{,}$ which are characterized by the reconstruction of the chemical bonds during the drawing of the melt in the zone of furnace 52 which has temperature conditions to change the melt viscosity to the values and the time required for the completion of relaxation processes.

The supercooling of the melt in the zone of the cathode process down to a glass transition temperature in the drawing process and the work of the electrochemical cell and/or the electrostatic field would result (at the termination of the relaxation processes) in obtaining glass with the structure and concentration of chemical elements and compounds corresponding to the structure and concentration of the chemical elements and compounds of the melt and with an excess positive charge (in the case when all the electric circuits are closed) acquired by the melt in the electrochemical process and retained by the electrostatic field.

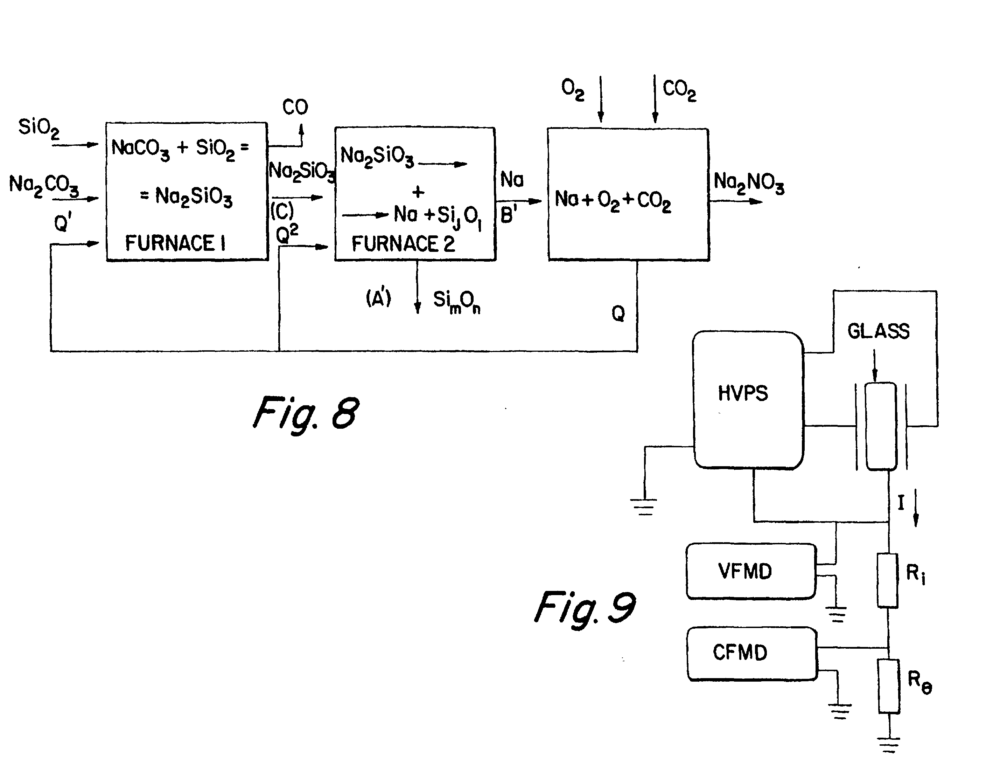

The equipment in furnace 52 would provide for the technical conditions for renewing of the molten tin continuously saturated by neutralized cations of sodium (Na) and accumulation of the tin-sodium alloy for subsequent treatment (processing) by known methods aimed at producing pure sodium (Na) and/or their oxidizing to the starting component (Na₂CO₃) of the mix and recovery of heat (Q) being released in the oxidizing process. The facilities in furnace 52 would make it possible to draw a high viscosity melt depleted of the active mobile part B prior to the obtaining the quartz-like in chemical content vitreous material (SiₘOₙ) with the desired sizes, geometry and technical characteristics (Fig. 8)

As a result of the above processes, a transition is made according to a pattern ${\text{SiO}}_{\text{2}} {\text{→ Si}}_{\text{j}} {\text{O}}_{\text{i}} {\text{→ Si}}_{\text{m}} {\text{O}}_{\text{n}} \text{.}$

The combination of the electric and electrostatic fields together with the action of the thermal field leads to the change of concentration of the active mobile part B (Na⁺) in the melt, to its removal or partial removal from the melt, with the formation (when all electric circuits are closed), or without the formation (when not all electric circuits are closed), of a positive charge distributed in the bulk of the remaining part of the melt.

In the case when a surplus positive charge is obtained in the glass, it would be neutralized by the electrons from the environment and/or by the organized current of the electrons when the electric circuit is closed, i.e., when the electrodes of the electrostatic field are discharged.

The thus obtained material would contain unbound electrons not entering into the glass structure which could theoretically enable electron current in the ground electrode in the material electric circuit to flow at a current of 0.1-2 mA upon application of the electrostatic field with a voltage between 0.5 to 6.0 KV under normal ambient conditions.

A surplus positive charge is controlled by an electrostatic field of the appropriate strength to obtain maximum electrical capacity.

When the electrostatic field strength is reduced corresponding to the specific capacity of the glass, a back current is caused in the ground electrode in the material electric circuit which will deliver useful work when a load is connected and that is a similarity of a storage battery.

Fig. 9 shows one of the possible patterns to the functioning of an energy accumulator (storage battery). Maintaining of the preset currents and voltage is made by regulating field intensity E1 created by a high voltage power source (HVPS). The regulation of the HVPS voltage is performed by two devices: a voltage feedback monitoring device - VFMD-U, and a current feedback monitoring device - CFMD-1.

When reducing a load voltage, the field intensity E1 should be reduced accordingly and in such a way current I is increased, leading to an increase of the load voltage. When reducing current, the HVPS voltage is reduced, leading to an increase of current I.

While the method of making glass described herein constitutes a preferred embodiment of this invention, it is to be understood that the invention is not limited to this precise form of apparatus or method and that changes may be made therein without departing from the scope of the appended claims.

## Claims

1. A method for producing glass from a melt of a glass-forming multi-component feed mix wherein the melt contacts a pair of electrodes (60, 62), which comprises the steps of:
(a) preparing a single phase melt (56) in which there are mobile cations from a glass forming feed mix, components of which feed mix are chemical compounds selected from the group consisting of a chemical compound which includes a univalent metal which in the melt is a mobile cation, a chemical compound including a divalent metal which in the melt is a mobile cation, and mixtures thereof, and chemical compounds selected from the group consisting of a chemical compound which includes a trivalent metal, a chemical compound which includes a metal with a valence higher than three and mixtures thereof;
(b) passing deliberately said melt (56) in contacting relationship with first and second electrodes (60, 62) from the first electrode (60) to the second electrode (62) and past the second electrode, said electrodes made of low electrical resistance material and completing a first electric circuit together with the melt (56) and a direct current voltage source (58),in which circuit the first electrode serves as the anode (60) and the second electrode serves as the cathode (54, 62);
(c) regulating a voltage (V1) in said first electrical circuit (58, 60, 56, 62) so that a direct electrical current is created in it and the concentration of the mobile cations in said melt (56) is lowered thereby with reduction on the cathode (62) of the metals of the same kind as the mobile cations; and
(d) cooling said melt which has the lowered concentration of said mobile cations.

2. The method of claim 1, wherein there also is another electrode (66) made of low electrical resistance material and which also serves as an anode (66) said anode separated from said melt (56) by a medium which is inert with respect to the melt, and thereby said melt (56) and said medium complete a second electric circuit including said electrodes (66, 62), said melt (56), said medium, and a direct current voltage source (64); and the voltage in said electric circuit is regulated to create an electrostatic field between the cathode (62) and anode (66) so that a direct electrical current is created and is passed through said cathode (62), said anode (66), said medium, and said melt (56), and thus the concentration of mobile cations in said melt (56) is lowered with reduction on the cathode (62) of the metals of the same kind.

3. The method of claim 1 or 2 wherein the glass forming feed mix melt having a lowered concentration of said mobile cations is cooled in the range of the temperatures of crystallization of this melt at a rate so as to obtain a material from this melt in the amorphous state.

4. The method of claim 1 or 2 wherein the glass forming feed mix melt having a lowered concentration of said mobile cations is maintained in the range of the temperatures of crystallization of this melt in such a way so as to obtain a material from this melt in the crystalline state.

5. The method of any of the preceding claims wherein said components are in the form of compounds selected from the group consisting of oxides, fluorides, bromides, carbonates, sulfates, nitrates, phosphates, and mixtures thereof.

6. The method of any of the preceding claims wherein said components comprise the chemical compound the carbonate Na₂CO₃ which includes the univalent metal sodium and the chemical compound the oxide SIO₂ which includes metal silicon with a valence higher than three (3).

7. The method of any of the preceding claims in which the concentration of the cations of the univalent metal sodium (Na) is lowered in order to obtain a single phase material of fused oxide of the higher valent metal silicon (Si) having a valence higher than three in the form of quartz glass (SiO₂)

8. The method of any of the preceding claimswherein steps (b) and (c) take place in a furnace (52) in which the temperature is above the glass transformation temperature of the glass forming feed mix melt placed into said furnace.

9. The method of claim 1 or 2 wherein the method and equipment for the float glass process is used to implement steps (a), (b), (c), and (d), and for step (c) a furnace which includes an electrode (54) with liquid metal is used, wherein this electrode (54) of liquid metal serves as the cathodes (62).

10. The method of claim 9 wherein the furnace (52) includes a electrode (60) for transferring the float glass melt onto the liquid metal, and the electrode (60) is made from a low electrical resistance material and serves as the anode (60).

11. The method of claim 10 wherein the electrode (54) with liquid metal simultaneously serves as the cathodes (62) in the electrical circuit with the anode (60) in contact with the melt (56) and in the electrical circuit with the anode (66) separated from the melt (56).

12. The method of claim 1, 2, 8, 9, 10, or 11 wherein said melt is passed from the electrode (60) that serves as the anode to and onto the electrode that serves as the cathode (62).

13. The method of claim 2 wherein in a furnace (52) prepared for lowering the concentration of mobile cations, the temperature and the impressed voltage are regulated to create an effective electrical current in this electric circuit so as not to cause an electrical arc breakdown in said medium either between the anode (66) and the materials of the furnace (52) or between the anode (66) and the cathode (62) in direct contact with said medium.

14. The method of claim 13 wherein for substantial lowering of the concentration of mobile cations, the temperature in said furnace (52) is above the glass transformation temperature of the glass forming feed mix melt (56) fed into this furnace onto the electrode (54) which is made of low electrical resistance material and serves as the cathode (62).

15. The method of claim 2 or 14 wherein a material with a modified surface layer is obtained by conducting the method for a time duration determined so that substantial lowering of the concentration of mobile cations in the melt of the glass forming feed mix occurs in the surface layer facing the anode.

16. The method of claim 13 wherein in the furnace (52) the temperature is maintained above the glass transformation temperature of the melt (56) at least where this melt is in contacting relationship with at least one of the electrodes (60) that serves as the anode.

17. The method of claim 16 wherein for substantial lowering of the concentration of said mobile cations, the temperature in said furnace is above the glass transformation temperature of the glass forming feed mix melt fed into this furnace of both the melt (56) which is passed in a contacting relationship with anode (60) and cathode (62), and for this same melt (56) which is passed in a contacting relationship with the cathode (62) which is in the same electric circuit with the anode (66) separated from this melt by said medium inert with respect to this melt.

18. The method of claim 16, wherein sheet glass with a modified surface layer is produced.

19. The method of claim 18, wherein sheet glass with a modified surface layer is produced from a melt of low temperature eutectics of a glass forming feed mix.

20. The method of claims 2, 9 or 16 wherein said melt is passed from the electrode that serves as the anode (60) in the electrical circuit with the anode in contact with the melt to and onto the same electrode that serves as the cathode (62) in both the electrical circuit with the anode (60) in contact with the melt and in the electric circuit with the anode (66) separated from this same melt.

21. The method of claim 2 wherein the medium with respect to the melt of the glass forming feed mix comprises a gas.

22. The method of claim 21 wherein the gas is an inert gas.

23. The method of claim 21 wherein the gas is nitrogen.

24. The method of claims 9, 16 or 21 wherein the medium is a gas, and the temperature, impressed voltage, and pressure are regulated to create an electrical current in the gaseous medium between the melt (56) of the glass forming feed mix and the anode (66) in such a way as to form in said gaseous medium by means of the ionization of the gaseous medium by the flow of electrons moving from said melt (26) to the anode (66) a glowing electric discharge in the gaseous medium for the establishment of the stable process of lowering the concentration of mobile cations in said melt.

25. The method of claims 16 or 17 wherein in the electric circuit with the anode (66) separated by said medium from said melt (56) which is passed in contacting relationship with the cathode (62) of this electric circuit the impressed voltage is effective so that the number of electrons creating the electric current between this anode (66) and this cathode (62) exceed the number of electrons required to neutralize the mobile cations on the cathode, and
(i) there is another electrical circuit which includes an electrode (74) made of low electrical resistance material and capable of gaining electrons which is situated between but not in contact with the anode (66) separated from the melt and the cathode (62) in such a way so that the present process is not interrupted, and a dry, inert, current-conducting medium, and this electrode (74) is connected by a conductor to a surface of more positive potential which creates an electric current in this thus-formed electric circuit thereby simultaneously creating a positive charge in the melt of the glass forming feed mix, and
(ii) wherein the melt with positive charge is withdrawn from the electrostatic field and cooled to obtain material in the amorphous or crystalline state.

26. The method of claim 2 wherein said melt in step (d) is cooled to a temperature wherein the melt is physically stable for handling and
(i) is arranged between electrodes made from low electrical resistance material adjacent to but space apart from said cooled melt which electrodes are connected to a direct current voltage source (68) and where one electrode serves as an anode (70) and the other electrode serves as cathode (72), and
(ii) there also is a electrode (74) made from low electrical resistance material in contact with said cooled melt connected to a surface of more positive potential, and
(iii) the voltage is regulated in electric circuit (i) to establish an electric current in this electric circuit causing the creation of an electric current towards the surface of more positive potential, causing an excess positive charge to be formed in said cooled melt (56).

27. The method of claim 25 or 26 wherein an electrical load is inserted in the existing electric circuit connected to the surface of more positive potential, and the voltage in the electric circuit including the anode, the cathode, and the direct current voltage source is regulated so as to create an electrical current from the surface of more positive potential towards said cooled melt with the created positive charge, by which electrical current said excess positive charge is neutralized and the electric load for the performance of work consumes the electric power stored as the result of the creation of said excess positive charge.

28. The method of any of claims 1, 2, 8, 9, 10, 11, or 16 wherein the low electrical resistance material, which serves as the cathode, is the metal being reduced on the cathode.

29. The method of claims 1, 2, 8, 9, 10, 11, or 16 wherein the low electrical resistance material, which serves as the cathode, dissolves metals being reduced on the cathode.

30. The method of claims 12, 9 or 29 wherein the low electrical resistance material that serves as the cathode comprises tin.

31. The method of claims 1, 2, 8, 9, 10, 11, or 16 wherein the low electrical resistance material, which serves as the cathode and contains metals being reduced on the cathode, is removed from the cathode electrode for subsequently obtaining the reduced metals.

32. The method of claim 31 wherein the subsequently obtained metals are oxidized to obtain heat, which is recovered.

33. The method of claim 32 wherein recovered heat is utilized in the present method.

34. The method of claim 33 wherein the recovered heat is utilized in step (a) of the present method.

35. The method of claim 31, wherein the subsequently obtained metals are oxidized in order to obtain components which form the glass forming feed mix.

## Patentansprüche

1. Verfahren zur Herstellung von Glas aus einer Schmelze einer glasbildenden Mehrkomponenten-Mischung, wobei die Schmelze ein Paar von Elektroden (60, 62) kontaktiert, umfassend die Schritte
(a) Herstellung einer einphasigen Schmelze (56), in der mobile Kationen aus der glasbildenden Mischung vorliegen, wobei die Komponenten der glasbildenden Mischung chemische Substanzen sind, welche ausgewählt.sind aus der Gruppe der univalenten Metalle, die in der Schmelze mobile Kationen sind, der divalenten Metalle, die in der Schmelze mobile Kationen sind, und Mischungen daraus sowie chemische Substanzen aus der Gruppe der trivalenten Metalle, der Metalle mit Valenzen größer als drei sowie Mischungen daraus;
(b) Bewegen der Schmelze (56) in Kontakt zu den ersten und zweiten Elektroden (60, 62) von der ersten Elektrode (60) zu der zweiten Elektrode (62) und daran vorbei, wobei die Elektroden aus Material mit geringem elektrischen Widerstand gefertigt sind und einen ersten elektrischen Stromkreis mit der Schmelze bilden, und eine Gleichstromquelle (58), wobei die erste Elektrode als Anode (60) und die zweite Elektrode als Kathode (54, 62) dient;
(c) Einspeisen einer Spannung (V1) in den ersten Stromkreis (58, 60, 56, 62), so daß ein direkter elektrischer Strom erzeugt wird und die Konzentration mobiler Kationen in der Schmelze (56) durch Reduktion an der Kathode (62) aus Metallen derselben Art wie die mobilen Kationen reduziert wird; und
(d) Abkühlung der Schmelze, die die verringerte Konzentration an besagten mobilen Kationen aufweist.

2. Verfahren nach Anspruch 1, wobei eine weitere Elektrode (66) aus einem Material mit geringem elektrischen Widerstand eingesetzt wird, die ebenfalls als Anode (66) dient, wobei diese Anode von der Schmelze (56) durch ein gegenüber der Schmelze inertes Medium abgetrennt ist und die Schmelze (56) und das Medium dadurch einen zweiten elektrischen Stromkreis bildet, welcher die Elektroden (66, 62), die Schmelze (56), das Medium und eine Gleichstromquelle (64) umfaßt; und wobei die Spannung in dem elektrischen Stromkreis reguliert wird, um ein elektrostatisches Feld zwischen der Kathode (62) und der Anode (66) zu erzeugen, so daß ein direkter elektrischer Strom erzeugt und durch die Kathode (62), die Anode (66), das Medium und die Schmelze (56) geleitet und so die Konzentration mobiler Kationen in der Schmelze (56) durch Reduktion an der Kathode (62) aus Metallen derselben Art wie die mobilen Kationen reduziert wird.

3. Verfahren nach einem der Ansprüche 1 oder 2, wobei die glasbildende Mischung mit verringerter Konzentration an mobilen Kationen so schnell auf Temperaturen in der Größenordnung der Kristallisationstemperatur der Schmelze abgekühlt wird, daß ein amorphes Material aus dieser Schmelze erhalten wird.

4. Verfahren nach einem der Ansprüche 1 oder 2, wobei die glasbildende Mischung mit verringerter Konzentration an mobilen Kationen bei Temperaturen in der Größenordnung der Kristallisationstemperatur der Schmelze gehalten wird, daß ein kristallines Material aus dieser Schmelze erhalten wird.

5. Verfahren nach einem der vorhergehenden Ansprüche, wobei die chemischen Substanzen aus der Gruppe der Oxide, Fluoride, Bromide, Carbonate, Sulfate, Nitrate, Phosphate und Mischungen daraus, stammen.

6. Verfahren nach einem der vorhergehenden Ansprüche, wobei die chemischen Substanzen das Carbonat Na₂CO₃ umfassen, das das einwertige Metall Natrium enthält, und das Oxid SiO₂ umfassen, das das Metall Silicium mit einer Valenz größer 3 enthält.

7. Verfahren nach einem der vorhergehenden Ansprüche, wobei die Konzentration der Kationen des einwertigen Metalls (nach Anspruch) reduziert wird, um ein einphasiges Material aus verschmolzenem Oxid des höhervalenten Metalls Silicium in Form von Quarzglas zu erhalten.

8. Verfahren nach einem der vorhergehenden Ansprüche, wobei die Schritte (b) und (c) in einem Ofen (52) stattfinden, in dem die Temperatur oberhalb der Glastransformationstemperatur der glasbildenden Mischung liegt, die in den Ofen eingebracht wird.

9. Verfahren nach einem der Ansprüche 1 oder 2, wobei das Verfahren und die Vorrichtungen des Fließglasverfahrens für die Durchführung der Schritte (a), (b), (c), und (d) genutzt wird, und für Schritt (c) ein Ofen genutzt wird, der eine Elektrode (54) mit flüssigem Metall aufweist, die als Kathode dient.

10. Verfahren nach Anspruch 9, wobei der Ofen (52) eine Elektrode (60) umfaßt, die aus einem Material mit geringem elektrischen Widerstand gebildet wird und als Anode (60) dient, welche das das Fließglas auf das flüssige Metall überführt.

11. Verfahren nach Anspruch 10, wobei die Elektrode (54) mit dem flüssigen Metall simultan als Kathode (62) in dem elektrischen Stromkreis mit der Anode (60), die in Kontakt zur Schmelze (56) steht, und in dem elektrischen Stromkreis mit der Anode (66), die von der Schmelze separiert ist, dient.

12. Verfahren nach einem der Ansprüche 1, 2, 8, 9, 10 oder 11, wobei die Schmelze von der Elektrode (60), die als Anode dient auf die Elektrode, die als Kathode (62) dient, bewegt wird.

13. Verfahren nach Anspruch 2, wobei in einem Ofen (52), der zur Verringerung der Konzentration mobiler Kationen vorbereitet ist, die Temperatur und die Spannung zur Bildung eines effektiven elektrischen Stroms reguliert werden, um einen Kurzschluß in diesem Medium entweder zwischen der Anode (66) und den Materialien des Ofens (52) oder zwischen der Anode (66) und der direkt mit dem Medium in Kontrakt stehenden Kathode (62) zu verhindern.

14. Verfahren nach Anspruch 13, wobei die Temperatur in dem Ofen (52) zur deutlichen verringerung der Konzentration an mobilen Kationen oberhalb der Glasübergangstemperatur der Schmelze (56) der glasbildenden Mischung gehalten wird, welche in den Ofen auf die Elektrode (54), die aus Material mit geringem elektrischen Widerstand gefertigt ist und als Kathode (62) dient, eingebracht wird.

15. Verfahren nach einem der Ansprüche 2 oder 14, wobei ein Material mit veränderter Oberflächenschicht erhalten wird, indem das Verfahren für eine vorbestimmte Zeit durchgeführt wird, so daß die Konzentration von mobilen Kationen in der Schmelze der glasbildenden Mischung vorwiegend in der Oberflächenschicht auftritt, die die Anode berührt.

16. Verfahren nach Anspruch 13, wobei die Temperatur in dem Ofen (52) oberhalb der Glasübergangstemperatur der Schmelze (56) der glasbildenden Mischung gehalten wird, zumindest dort wo diese Schmelze mindestens eine der Elektroden (60) berührt, die als Anode dienen.

17. Verfahren nach Anspruch 16, wobei die Temperatur in dem Ofen (52) zur deutlichen Verringerung der Konzentration an mobilen Kationen oberhalb der Glasübergangstemperatur der Schmelze der glasbildenden Mischung gehalten wird, welche in den Ofen eingebracht wird, und zwar der Schmelze (56), welche in Kontakt mit der Anode (60) und der Kathode (62) in den Ofen eingebracht wird und, für dieselbe Schmelze (56), welche in Kontakt mit der Kathode (62) welche im selben elektrischen Stromkreis mit der Anode (66) steht und von der Schmelze durch ein gegenüber der Schmelze inertes Medium getrennt ist.

18. Verfahren nach Anspruch 16, wobei Flachglas mit einer veränderten Oberflächenschicht produziert wird.

19. Verfahren nach Anspruch 18, wobei Flachglas mit einer veränderten Oberflächenschicht aus einer Schmelze von Niedrigtemperatur-Eutektika der glasbildenden Mischung produziert wird.

20. Verfahren nach einem der Ansprüche 2, 9 oder 16, wobei die Schmelze von der Elektrode, die als Anode (60) im elektrischen Schaltkreis mit der Anode in Kontakt mit der Schmelze dient, zu und auf dieselbe Elektrode, die als Kathode (60) in beiden elektrischen Stromkreisen mit der Anode (60) in Kontakt mit der Schmelze und im elektrischen Stromkreis mit der Anode (66), die von der Schmelze separiert ist, dient

21. Verfahren nach Anspruch 2, wobei das Medium mit Kontakt zur Schmelze der glasbildenden Mischung ein Gas umfaßt.

22. Verfahren nach Anspruch 21, wobei das Gas ein Inertgas ist.

23. Verfahren nach Anspruch 21, wobei das Gas Stickstoff ist.

24. Verfahren nach einem der Ansprüche 9, 16 oder 21, wobei das Medium ein Gas ist und die Temperatur, die Spannung und der Druck zur Bildung eines effektiven elektrischen Stroms im gasförmigen Medium zwischen der Schmelze (56) der glasbildenden Mischung und der Anode (66) reguliert werden, um im gasförmigen Medium durch die Ionisation des gasförmigen Mediums eine Glimmentladung zwischen der Schmelze (56) und der Anode (66) zu erzeugen, die eine stabile Verringerung der Konzentration mobiler Kationen in der Schmelze ermöglicht.

25. Verfahren nach einem der Ansprüche 16 oder 17, wobei im Stromkreis mit der Anode (66), die durch das Medium von der Schmelze (56), die in Kontakt mit der Kathode (62) bewegt wird, getrennt ist, die Spannung ausreicht, damit die Zahl der Elektronen, die den Strom zwischen Anode (66) und Kathode (62) bilden, die Zahl der Elektronen, die zur Neutralisation der mobilen Kationen benötigt werden, übersteigt, und
(i) ein weiterer elektrischer Stromkreis vorhanden ist, der ein Elektrode (74) beinhaltet, die aus Material mit niedrigem elektrischen Widerstand gefertigt ist, Elektronen aufnehmen kann und zwischen der Anode (66), die von der Schmelze getrennt ist, aber nicht in Kontakt mit ihr, und der Kathode (62) positioniert ist, so daß das Verfahren nicht unterbrochen wird und ein trockenes, inertes stromleitendes Medium und diese Elektrode (74) durch ein leitfähiges Material mit einer Oberfläche eines höheren positiven Potentials verbunden ist, welches einen elektrischen Strom in diesem Stromkreis und gleichzeitig eine positive Ladung in der Schmelz der glasbildenden Mischung erzeugt, und
(ii) wobei die Schmelze mit positiver Ladung aus dem elektrostatischen Feld entfernt wird und abgekühlt wird, um Material im amorphen oder kristallinen Zustand zu erhalten.

26. Verfahren nach Anspruch 2, wobei die Schmelze in Schritt (d) auf eine Temperatur abgekühlt wird, bei der sie physikalisch stabil handhabbar ist und
(i) zwischen Elektroden aus Material mit geringem elektrischen Widerstand angeordnet wird, angrenzend an, aber beabstandet von der gekühlten Schmelze, wobei die Elektroden mit einer Gleichstromquelle (68) verbunden werden, und wobei eine Elektrode als Anode (70) und die andere Elektrode als Kathode (72) dient, und
(ii) eine weitere Elektrode (74) aus Material mit geringem elektrischen Widerstand vorhanden ist, die in Kontakt zu der gekühlten Schmelze steht und mit einer Oberfläche eines höheren positiven Potentials verbunden ist, und
(iii) die Spannung im Stromkreis (i) reguliert wird, um einen Strom zu erzeugen, der einen Strom zur Oberfläche des höheren positiven Potentials erzeugt, was zu einer erhöhten positiven Ladung in der gekühlten Schmelze führt.

27. Verfahren nach einem der Ansprüche 25 oder 26, wobei eine elektrische Ladung in den elektrischen Stromkreis, der mit der Oberfläche mit höherem positiven Potential verbunden ist, gebracht wird und die Spannung im elektrischen Stromkreis, der die Anode, die Kathode und die Gleichstromquelle enthält, so reguliert wird, daß ein elektrischer Strom von der Oberfläche mit erhöhtem positiven Potential zur gekühlten Schmelze mit der erzeugten positiven Ladung fließt, wodurch die erhöhte positive Ladung neutralisiert wird und die elektrische Ladung für die Durchführung der Arbeit die als Resultat der Bildung der positiven Überschußladung gespeicherte elektrische Leistung verbraucht.

28. Verfahren nach einem der Ansprüche 1, 2, 8, 9, 10, 11 oder 16, wobei das Material mit niedrigem elektrischen Widerstand, das als Kathode dient, das Metall ist, welches an der Kathode reduziert wird.

29. Verfahren nach einem der Ansprüche 1, 2, 8, 9, 10, 11 oder 16, wobei das Material mit niedrigem elektrischen Widerstand, das als Kathode dient, Metalle, die an der Kathode reduziert werden, auflöst.

30. Verfahren nach einem der Ansprüche 1, 2, 8, 9, 10, 11 oder 16, wobei das Material mit niedrigem elektrischen Widerstand, das als Kathode dient, Zinn enthält.

31. Verfahren nach einem der Ansprüche 1, 2, 8, 9, 10, 11 oder 16, wobei das Material mit niedrigem elektrischen Widerstand, das als Kathode dient und Metalle enthält, die an der Kathode reduziert werden, von der Kathode entfernt wird, um die reduzierten Metalle nacheinander zu gewinnen.

32. Verfahren nach Anspruch 31, wobei die aufeinanderfolgend gewonnenen Metalle zur Gewinnung wiederverwertbarer Wärme oxidiert werden.

33. Verfahren nach Anspruch 32, wobei die zurückgewonnene Wärme im gegenwärtigen Verfahren verwendet wird.

34. Verfahren nach Anspruch 33, wobei die zurückgewonnene Wärme in Schritt (a) des gegenwärtigen Verfahrens verwendet wird.

35. Verfahren nach Anspruch 31, wobei die aufeinanderfolgend gewonnenen Metalle zur Gewinnung von Komponenten für die glasbildende Mischung oxidiert werden.

## Revendications

1. Procédé pour la production de verre de partir d'une masse fondue d'un mélange d'alimentation à composants multiples formateur de verre, dans lequel la masse fondue entre en contact avec une paire d'électrodes (60, 62), qui comprend les étapes consistant à :
(a) préparer une masse fondue monophasique (56) dans laquelle sont présents des cations mobiles provenant d'un mélange d'alimentation formateur de verre, les composants dudit mélange d'alimentation étant des composés chimiques choisis parmi le groupe constitué par un composé chimique qui englobe un métal monovalent qui, dans la masse fondue, représente un cation mobile, un composé chimique englobant un métal divalent qui, dans la masse fondue, représente un cation mobile, ainsi que des mélanges desdits composés, et des composants chimiques choisis parmi le groupe constitué par un composant chimique qui englobe un métal trivalent, un composé chimique qui englobe un métal dont la valence est supérieure à trois, ainsi que des mélanges desdits composés ;
(b) faire passer de manière délibérée ladite masse fondue (56) dans une relation de mise en contact avec des première et deuxième électrodes (60, 62) depuis la première électrode (60) en direction de la deuxième électrode (62) et devant la deuxième électrode, lesdites électrodes étant constituées d'une matière à faible résistance électrique et complétant un premier circuit électrique de manière conjointe avec la masse fondue (56) et avec une source de tension de courant continu (58), circuit dans lequel la première électrode fait office d'anode (60) et la deuxième électrode fait office de cathode (54, 62) ;
(c) régler une tension (V1) dans ledit premier circuit électrique (58, 60, 56, 62) de façon à y générer un courant électrique en continu et de façon à diminuer la concentration des cations mobiles dans ladite masse fondue (56), en réduisant, sur la cathode (62), la quantité des métaux du même type sous forme de cause cations mobiles ; et
(d) refroidir ladite masse fondue qui possède une concentrations inférieures desdits cations mobiles.

2. Procédé selon la revendication 1, dans lequel on prévoit également une autre électrode (66) constituée d'une matière à faible résistance électrique et qui fait également office d'anode (66), ladite anode étant séparée de ladite masse fondue (56) par un milieu qui est inerte par rapport à la masse fondue, si bien que ladite masse fondue et ledit milieu complètent un deuxième circuit électrique englobant lesdites électrodes (66, 62), ladite masse fondue (56), ledit milieu et une source de tension de courant continu (64) ; et on règle la tension dans ledit circuit électrique afin de créer un champ électrostatique entre la cathode (62) et l'anode (66), si bien que l'on crée un courant électrique continu qui circule à travers ladite cathode (62), à travers ladite anode (66), à travers ledit milieu et à travers ladite masse fondue (56) pour ainsi diminuer la concentration des cations mobiles dans ladite masse fondue (56) et ainsi réduire la quantité des métaux du même type sur la cathode (62).

3. Procédé selon la revendication 1 ou 2, dans lequel on refroidit la masse fondue du mélange d'alimentation formateur de verre possédant une concentration réduite desdits cations mobiles, dans la plage des températures de cristallisation de ladite masse fondue à une vitesse telle que l'on obtient une matière, à partir de masse fondue, à l'état amorphe.

4. Procédé selon la revendication 1 ou 2, dans lequel on maintient la masse fondue du mélange d'alimentation formateur de verre possédant une concentration réduite desdits cations mobiles, dans la plage des températures de cristallisation de ladite masse fondue à une vitesse telle que l'on obtient une matière, à partir de masse fondue, à l'état cristallin.

5. Procédé selon l'une quelconque des revendications précédentes, dans lequel lesdits composants se présentent sous la forme de composés choisis parmi le groupe constitué par des oxydes, des fluorures, des bromures, des carbonates, des sulfates, des nitrates, des phosphates et leurs mélanges.

6. Procédé selon l'une quelconque des revendications précédentes, dans lequel lesdits composants comprennent comme composé chimique, à titre de carbonate, le carbonate de sodium qui englobe du sodium métallique monovalent et comme composé chimique, à titre d'oxyde, du dioxyde de silicium qui englobe du silicium métallique dont la valence est supérieure à trois (3).

7. Procédé selon l'une quelconque des revendications précédentes, dans lequel on diminue la concentration des cations du sodium métallique univalent (Na) dans le but d'obtenir une matière monophasique d'oxyde en fusion du silicium métallique (Si) à valence supérieure possédant une valence supérieure à trois, sous la forme de verre quartzeux (dioxyde de silicium).

8. Procédé selon l'une quelconque des revendications précédentes, dans lequel on met en oeuvre les étapes (b) et (c) dans un four (52) dans lequel la température est supérieure à la température de transition vitreuse de la masse fondue du mélange d'alimentation formateur de verre placée dans ledit four.

9. Procédé selon la revendication 1 ou 2, dans lequel on utilise le procédé et l'équipement destiné à la production de verre flotté pour la mise en oeuvre des étapes (a), (b), (c) et (d), et on utilise pour l'étape (c), une électrode (54) comprenant du métal liquide, dans lequel ladite électrode (54) de métal liquide fait office de cathode (62).

10. Procédé selon la revendication 9, dans lequel le four (52) englobe une électrode (60) pour transférer le verre flotté sur le métal liquide, et l'électrode (60) est constituée d'une matière à faible résistance électrique et fait office d'anode (60).

11. Procédé selon la revendication 10, dans lequel l'électrode (54) comprenant du métal liquide fait simultanément office de cathode (62) dans le circuit électrique avec l'anode (60) en contact avec la masse fondue (56) et dans le circuit électrique avec l'anode (66) séparée de la masse fondue (56).

12. Procédé selon la revendication 1, 2, 8, 9, 10 ou 11, dans lequel on fait passer ladite masse fondue de l'électrode (60) qui fait office d'anode en direction et sur l'électrode qui fait office de cathode (62).

13. Procédé selon la revendication 2, dans lequel, dans un four (52) préparé pour réduire la concentration des cations mobiles, on règle la température et la tension imposée pour créer un courant électrique effectif dans ce circuit électrique de façon à ne pas provoquer une rupture de l'arc électrique dans ledit milieu, soit entre l'anode (66) et les matières du four (52), soit entre l'anode (66) et la cathode (62) en contact direct avec ledit milieu.

14. Procédé selon la revendication 13, dans lequel, pour obtenir une diminution substantielle de la concentration des cations mobiles, la température régnant dans ledit four (52) est supérieure à la température de transition vitreuse de la masse fondue de mélange d'alimentation formateur de verre (56) alimentée dans ledit four sur l'électrode (54) qui est constituée d'une matière à faible résistance électrique et qui fait office de cathode (62).

15. Procédé selon la revendication 2 ou 14, dans lequel on obtient une matière possédant une couche superficielle modifiée en mettant en oeuvre le procédé pendant un laps de temps déterminé de telle sorte que la diminution de la concentration des cations mobiles dans la masse fondue du mélange d'alimentation formateur de verre a lieu dans la couche superficielle opposée à l'anode.

16. Procédé selon la revendication 13, dans lequel, dans le four (52), on maintient la température au-dessus de la température de transition vitreuse de la masse fondue (56), au moins à l'endroit où cette masse fondue entre en contact avec au moins une des électrodes (60) qui fait office d'anode.

17. Procédé selon la revendication 16, dans lequel, pour diminuer de manière substantielle la concentration desdits cations mobiles, la température régnant dans ledit four est supérieure à la température de transition vitreuse de la masse fondue de mélange d'alimentation formateur de verre, alimentée dans ledit four, à la fois pour la masse fondue (56) que l'on fait passer en relation de mise en contact avec l'anode (60) et avec la cathode (62) et pour cette même masse fondue (56) que l'on fait passer dans une relation de mise en contact avec la cathode (62) qui est disposée dans le même circuit électrique que l'anode (66) séparée de ladite masse fondue par ledit milieu inerte par rapport à ladite masse fondue.

18. Procédé selon la revendication 16, dans lequel on fabrique du verre à vitres possédant une couche superficielle modifiée.

19. Procédé selon la revendication 18, dans lequel on fabrique du verre à vitres possédant une couche superficielle modifiée à partir d'une masse fondue d'un système eutectique basse température d'un mélange d'alimentation formateur de verre.

20. Procédé selon la revendication 2, 9 ou 16, dans lequel on fait passer ladite masse fondue de l'électrode qui fait office d'anode (60) dans le circuit électrique, dans lequel l'anode est mise en contact avec la masse fondue, en direction et sur la même électrode qui fait office de cathode (62) à la fois dans le circuit électrique dans lequel l'anode (60) est mise en contact avec la masse fondue et dans le circuit électrique dans lequel l'anode (66) est séparée de cette même masse fondue.

21. Procédé selon la revendication 2, dans lequel le milieu par rapport à la masse fondue du mélange d'alimentation formateur de verre comprend un gaz.

22. Procédé selon la revendication 21, dans lequel le gaz est un gaz inerte.

23. Procédé selon revendication 21, dans lequel le gaz est de l'azote.

24. Procédé selon la revendication 9, 16 ou 21, dans lequel le milieu est un gaz et la température, la tension imposée et la pression sont réglées de façon à créer un courant électrique dans le milieu gazeux entre la masse fondue (56) du mélange d'alimentation formateur de verre et l'anode (66) de façon à obtenir, dans ledit milieu gazeux, via l'ionisation du milieu gazeux par la circulation d'électrons se déplaçant dans ladite masse fondue (26) en direction de l'anode (66), une décharge électrique incandescente dans le milieu gazeux pour établir un procédé stable de diminution de la concentration des cations mobiles dans ladite masse fondue.

25. Procédé selon la revendication 16 ou 17, dans lequel, dans le circuit électrique, dans lequel l'anode (66) séparée par ledit milieu de ladite masse fondue (56) que l'on fait passer en relation de mise en contact avec la cathode (62) de ce circuit électrique, la tension imposée est efficace pour obtenir un nombre d'électrons générant le courant électrique entre cette anode (66) et cette cathode (62) qui dépasse le nombre d'électrons requis pour neutraliser les cations mobiles sur la cathode, et
(i) on prévoit un autre circuit électrique qui englobe une électrode (74) constituée d'une matière à faible résistance électrique et capable de gagner des électrons, qui est située entre l'anode (66) séparée de la masse fondue et la cathode (62), sans entrer en contact avec ni l'une, ni l'autre, de telle sorte que le processus en vigueur ne soit pas interrompu, et un milieu inerte, sec, conducteur de courant, ladite électrode (74) étant reliée par un conducteur à une surface possédant un potentiel plus positif qui crée un courant électrique dans ce circuit électrique ainsi obtenu, pour ainsi créer de manière simultanée une charge positive dans la masse fondue du mélange d'alimentation formateur de verre, et
(ii) dans lequel la masse fondue possédant une charge positive est extraite du champ électrostatique et est refroidie pour obtenir une matière à l'état amorphe ou à l'état cristallin.

26. Procédé selon la revendication 2, dans lequel, ladite masse fondue à l'étape (d) est refroidie jusqu'à une température à laquelle la masse fondue est stable du point de vue physique pour la manipulation, et
(i) est arrangée entre des électrodes constituées d'une matière à faible résistance électrique en position adjacente à ladite masse fondue refroidie, tout en étant espacée de ces dernières, lesdites électrodes étant reliées à une source de tension de courant continu (68) et une électrode faisant office d'anode (70), l'autre électrode faisant office de cathode (72), et
(ii) on prévoit également une électrode (74) constituée d'une matière à faible résistance électrique en contact avec ladite masse fondue refroidie, reliée à une surface possédant un potentiel plus positif, et
(iii) on règle la tension régnant dans le circuit électrique (i) pour établir un courant électrique dans ce circuit électrique donnant lieu à la création d'un courant électrique circulant en direction de la surface possédant un potentiel plus positif, si bien que l'on obtient la formation d'une charge positive en excès dans ladite masse fondue refroidie (56).

27. Procédé selon la revendication 25 ou 26, dans lequel on insère une charge électrique dans le circuit électrique existant relié à la surface possédant un potentiel plus positif et on règle la tension régnant dans le circuit électrique englobant l'anode, la cathode et la source de tension de courant continu de façon à créer un courant électrique depuis la surface possédant un potentiel plus positif en direction de ladite masse fondue refroidie comprenant la charge positive générée, courant électrique par lequel ladite charge positive en excès est neutralisée et la charge électrique pour la mise en oeuvre du travail consomme l'énergie électrique stockée suite à la création de ladite charge positive en excès.

28. Procédé selon l'une quelconque des revendications 1, 2, 8, 9, 10, 11 ou 16, dans lequel la matière à faible résistance électrique qui fait office de cathode est le métal soumis à une réduction sur la cathode.

29. Procédé selon l'une quelconque des revendications 1, 2, 8, 9, 10, 11 ou 16, dans lequel la matière à faible résistance électrique qui fait office de cathode dissout les métaux soumis à une réduction sur la cathode.

30. Procédé selon la revendication 12, 9 ou 29, dans lequel la matière à faible résistance électrique qui fait office de cathode comprend de l'étain.

31. Procédé selon l'une quelconque des revendications 1, 2, 8, 9, 10, 11 ou 16, dans lequel la matière à faible résistance électrique qui fait office de cathode et qui contient des métaux soumis à une réduction sur la cathode, est éliminée de l'électrode faisant office de cathode pour obtenir par la suite des métaux à l'état réduit.

32. Procédé selon revendication 31, dans lequel les métaux obtenus par la suite sont oxydés pour obtenir de la chaleur qui est récupérée.

33. Procédé selon revendication 32, dans lequel la chaleur récupérée est utilisée dans le procédé de la présente invention.

34. Procédé selon revendication 33, dans lequel la chaleur récupérée est utilisée à l'étape (a) du procédé la présente invention.

35. Procédé selon revendication 31, dans lequel les métaux obtenus par la suite sont oxydés dans le but d'obtenir des composants qui forment le mélange d'alimentation formateur de verre.
